(19) **Europäisches Patentamt / European Patent Office / Office européen des brevets**

(11) **EP 2 368 921 B1**

(12) **EUROPEAN PATENT SPECIFICATION**

(45) Date of publication and mention
of the grant of the patent:
**26.11.2014 Bulletin 2014/48**

(51) Int Cl.:
*C08F 10/06* (2006.01)  *C08F 2/00* (2006.01)
*C08F 297/08* (2006.01)  *C08L 23/14* (2006.01)
*C08F 210/06* (2006.01)

(21) Application number: **10157879.7**

(22) Date of filing: **26.03.2010**

(54) **PROCESS FOR THE PREPARATION OF FLOWABLE COMONOMER RICH POLYPROPYLENE**

VERFAHREN ZUR HERSTELLUNG VON FLIEßFÄHIGEM, COMONOMERREICHEN POLYPROPYLEN

PROCÉDÉ DE PRÉPARATION DE POLYPROPYLÈNE FLUIDE RICHE EN COMONOMÈRES

(84) Designated Contracting States:
**AT BE BG CH CY CZ DE DK EE ES FI FR GB GR HR HU IE IS IT LI LT LU LV MC MK MT NL NO PL PT RO SE SI SK SM TR**

(43) Date of publication of application:
**28.09.2011 Bulletin 2011/39**

(73) Proprietor: **Borealis AG**
**1220 Vienna (AT)**

(72) Inventors:
• **Tuominen, Olli**
**00930 Helsinki (FI)**
• **Malm, Bo**
**02110 Espoo (FI)**
• **Leskinen, Pauli**
**00700 Helsinki (FI)**

(74) Representative: **Maiwald Patentanwalts GmbH**
**Elisenhof**
**Elisenstrasse 3**
**80335 München (DE)**

(56) References cited:
EP-A1- 1 236 769  EP-A1- 2 065 404
WO-A1-2004/000899  WO-A1-2009/153213
WO-A1-2010/006961  WO-A1-2010/057915
WO-A1-2010/057916  WO-A2-2008/015113

Remarks:
The file contains technical information submitted after the application was filed and not included in this specification

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to a new method for the preparation of a comonomer rich polypropylene.

For many end applications polypropylenes are required containing high amounts of comonomer content. Such polypropylenes can be either random propylene copolymers or heterophasic polypropylenes.

The heterophasic polypropylene (HECO) is a polymer having a matrix phase and a dispersed phase. The matrix phase is usually a propylene homopolymer or copolymer and the dispersed phase is often an elastomeric material, like a propylene copolymer comprising ethylene and/or other higher $\alpha$-olefin(s). In some demanding applications advanced high impact materials are desired. High impact levels are only achieved with a heterophasic polypropylene (HECO) containing rather high amounts of elastomeric material. One detrimental side effect of such high amounts of elastomeric material is that the heterophasic polypropylene powder (HECO) gets sticky.

For other specific applications, a high amount of comonomers needs to be incorporated into the random polypropylene to obtain a material having a high flexibility, softness and impact strength. Furthermore, optical properties as well as sealability are improved with random polypropylene having a high comonomer content. However, the higher the comonomer content, the higher is the risk that the polymer material causes stickiness problems.

Sticky material tends to agglomerate and leading to sheeting in the transfer lines, hoppers and vessels. In severe cases the sticky polypropylene powder may also cause blocking of the system. This stickiness problem occurs in particular in the bottom of the purge bin, the rotary feeder and the conveying line to the extruder or to the powder bin as well as in the powder bin itself. In other words the stickiness problem is in particular imminent before the polypropylene powder has been extruded to pellets.

WO 2008/015113 discloses a polymerization process for preparing heterophasic propylene copolymers in two or more gas-phase reactors connected in series, in the presence of a polymerization catalyst.

WO 2009/153213 discloses reactor grade thermoplastic polyolefins with high flowability and excellent surface quality comprising a propylene homo- or copolymer matrix, and two different elastomeric ethylene-propylene copolymers, obtainable by a multistage polymerization process with at least 3 polymerization steps.

WO 2004/000899 discloses a process for the preparation of a polypropylene polymer composition with bimodal rubber, comprising one slurry reactor and two gas phase reactors.

Accordingly the object of the present invention is to provide a process for the preparation of comonomer rich polypropylene in which the polymer can be easily conveyed from the polymerisation unit to the extrusion unit.

The finding of the present invention is that a comonomer rich polypropylene being free flowing can be obtained in a sequential polymerization process in case in the last reactor of the polymerization sequence a polymer fraction is produced having either a low xylene cold soluble (XCS) content or an amorphous fraction with a rather high intrinsic viscosity (IV).

Thus the present invention is directed to a process for producing a polypropylene composition (PPC-F), said composition (PPC-F) comprises units derived from

    (i) propylene and
    (ii) at least one C2 to C20 $\alpha$-olefin other than propylene in an amount of at least 4.0 wt.-% measured by Fourier transform infrared spectroscopy and given in wt.%, and
    said process comprises the steps of

        (a) producing in at least one first reactor (R-1) a first polypropylene (PP-1) having a xylene cold soluble (XCS) content measured according to ISO 6427 not exceeding 4.0 wt.-%,
        (b) transferring said first polypropylene (PP-1) in a second reactor (R-2),
        (c) producing in the second reactor (R-2) in the presence of the first polypropylene (PP-1) a second polypropylene (PP-2) thereby obtaining a first polypropylene composition (PPC-1), wherein

            (c1) said second polypropylene (PP-2) comprises units derived from

                (i) propylene and
                (ii) at least one C2 to C20 $\alpha$-olefin other than propylene in an amount of at least 9.0 wt-%,

            (c 2) said first polypropylene composition (PPC-1) has a comonomer content in the amorphous fraction (AM) of the xylene cold soluble (XCS) fraction measured by Fourier transform infrared spectroscopy of at least 25 wt.%,

        (d) transferring said first polypropylene composition (PPC-1) to a third reactor (R-3),
        (e) producing in the third reactor (R-3) in the presence of the first polypropylene composition (PPC-1) a third polypropylene (PP-3) thereby obtaining the polypropylene composition (PPC-F), wherein the intrinsic viscosity (IV) of the amorphous part (AM) of the xylene cold soluble (XCS) fraction of the third polypropylene (PP-3) is at least 3 dl/g.

Further it is appreciated that in step (a) at least a slurry reactor, like a loop reactor is used. On the other hand in the steps (c) and (e) the second reactor (R-2) and third reactor (R-3), respectively, are gas phase reactors. It is in particular appreciated that the third reactor (R-3) is the last reactor in the process, i.e. the polypropylene composition (PPC-F) is discharged from said third reactor (R-3).

Surprisingly it has been found out that with the above defined polymerization sequence polypropylene compositions with high comonomer content are producible being not sticky, i.e. having a high flowability. It has been in particular found that in the last reactor polymer material must be produced being less sticky than the polymer material produced in the reactors before (see table 1). Without be bonded on the theory it is presumed that at least part of the polymer material produced in the last reactor acts as a sheeting of the sticky polymer produced in the reactors before. Accordingly the polymer particles are less sticky compared to a polymer material with the same properties but produced in a conventional way, i.e. the sticky material is produced in the last reactor.

In the following the individual components produced in the respective reactors are described in more detail.

As indicated above the first polypropylene (PP-1) is featured by low amounts of xylene cold solubles (XCS). Accordingly it is required that the first polypropylene (PP-1) has a xylene cold soluble (XCS) content measured according to ISO 6427 not exceeding 4.0 wt.-%, preferably not exceeding 3.5 wt.-%, more preferably in the range of 0.5 to 4.0 wt.-%, like 0.5 to 3.5 wt.-%.

Keeping in mind that the first polypropylene (PP-1) shall have rather low amount of xylene cold solubles (XCS) it is appreciated that said first polypropylene (PP-1) is a first propylene homopolymer (H-PP1) or a first random propylene copolymer (R-PP1). It is in particular preferred that the first polypropylene (PP-1) is a first propylene homopolymer (H-PP1). The first propylene homopolymer (H-PP1) has preferably a xylene cold soluble (XCS) content measured according to ISO 6427 not exceeding 3.5 wt.-%, preferably not exceeding 3.0 wt.-%, more preferably in the range of 0.5 to 3.5 wt.-%, like 0.5 to 3.0 wt.-% whereas the first random propylene copolymer (R-PP1) has preferably a xylene cold soluble (XCS) content measured according to ISO 6427 not exceeding 4.0 wt.-%, preferably not exceeding 3.5 wt.-%, more preferably in the range of 1.0 to 4.0 wt.-%, like 1.0 to 3.5 wt.-%.

The expression propylene homopolymer as used throughout the instant invention relates to a polypropylene that consists substantially, i.e. of more than 99.5 wt.-%, still more preferably of at least 99.7 wt.-%, like of at least 99.8 wt.-%, of propylene units. In a preferred embodiment only propylene units in the propylene homopolymer are detectable. The comonomer content can be determined with FT infrared spectroscopy, as described below in the examples.

The first propylene homopolymer (H-PP1) is preferably an isotactic propylene homopolymer. Accordingly it is appreciated that the first polypropylene matrix (H-PP1) has a rather high isotactic pentad concentration, i.e. higher than 90 mol-%, more preferably higher than 92 mol-%, still more preferably higher than 93 mol-% and yet more preferably higher than 95 mol-%, like higher than 97 mol-%.

The first random propylene copolymer (R-PP1) preferably comprises, preferably consist of, units derived from

(i) propylene and
(ii) ethylene and/or at least one $C_4$ to $C_{20}$ α-olefin, preferably at least one α-olefin selected from the group consisting of ethylene, 1-butene, 1-pentene, 1-hexene and 1-octene, more preferably ethylene and/or 1-butene, yet more preferably ethylene.

Accordingly the first random propylene copolymer (R-PP1) may comprise units derived from propylene, ethylene and optionally at least another $C_4$ to $C_{10}$ α-olefin. In one specific aspect of the present invention the first random propylene copolymer (R-PP1) comprises units derived from propylene, ethylene and optionally at least another α-olefin selected from the group consisting of $C_4$ α-olefin, $C_5$ α-olefin, $C_6$ α-olefin, $C_7$ α-olefin, $C_8$ α-olefin, $C_9$ α -olefin and $C_{10}$ α-olefin. More preferably the first random propylene copolymer (R-PP1) comprises units derived from propylene, ethylene and optionally at least another α-olefin selected from the group consisting of 1-butene, 1-pentene, 1-hexene, 1-heptene, 1-octene, 1-nonene and 1-decene, wherein 1-butene and 1-hexene are preferred. It is in particular preferred that the first random propylene copolymer (R-PP1) consists of units derived from propylene and ethylene. Preferably the units derivable from propylene constitutes the main part of the first random propylene copolymer (R-PP1), i.e. at least 96.0 wt.-%, preferably of at least 97.0 wt.-%, more preferably of at least 98.0 wt.-%, still more preferably of 96.0 to 99.5 wt.-%, yet more preferably of 97.0 to 99.5 wt.-%, still more preferably of 98.0 to 99.2 wt.-%. The amount of units derived from $C_2$ to $C_{20}$ α-olefins other than propylene in the first random propylene copolymer (R-PP1), is in the range of 0.5 to 4.0 wt.-%, more preferably 0.5 to 3.0 wt.-%, still more preferably 0.8 to 2.0 wt.-%. It is in particular appreciated that the amount of ethylene in the first random propylene copolymer (R-PP1), in particular in case the first random propylene copolymer (R-PP1) comprises only units derivable from propylene and ethylene, is in the range of 0.5 to 4.0 wt.-%,

preferably of 0.8 to 2.0 wt.-%.

Further the units derived from $C_2$ to $C_{20}$ $\alpha$-olefins other than propylene within the first random propylene copolymer (R-PP1) are randomly distributed. The randomness indicates the amount of isolated comonomer units, i.e. those which have no other comonomer units in the neighbourhood, compared to the total amount of comonomers in the polymer chain. In a preferred embodiment, the randomness of the first random propylene copolymer (R-PP1) is at least 30 %, more preferably at least 50 %, even more preferably at least 60 %, and still more preferably at least 65 %.

As indicated above the first polypropylene (PP-1), i.e. the first propylene homopolymer (H-PP1) or the first random propylene copolymer (R-PP1), are produced in at least one first reactor (R-1). Preferably the first polypropylene (PP-1), i.e. the first propylene homopolymer (H-PP1) or the first random propylene copolymer (R-PP1), is produced in at least one slurry reactor, e.g. loop reactor, even more preferred in at least two reactors, e.g. in a slurry reactor, preferably in a loop reactor, and subsequently in a gas phase reactor.

A slurry reactor according to this invention designates any reactor, such as a continuous or simple batch stirred tank reactor or loop reactor, operating in bulk or slurry and in which the polymer forms in particulate form. "Bulk" means a polymerization in reaction medium that comprises at least 60 wt.-% monomer. According to a preferred embodiment the slurry reactor is a (bulk) loop reactor.

In case the first polypropylene (PP-1), i.e. the first propylene homopolymer (H-PP1) or the first random propylene copolymer (R-PP1), is produced in two reactors, e.g. in a slurry reactor, preferably in a loop reactor, and subsequently in a gas phase reactor, it can be either unimodal or mutimodal, like bimodal, in view of the molecular weight distribution (MWD) and/or the comonomer content.

Thus expression "multimodal" or "bimodal" used herein refers to the modality of the polymer, i.e.

■ the form of its molecular weight distribution curve, which is the graph of the molecular weight fraction as a function of its molecular weight,
and / or
■ the form of its comonomer content distribution curve, which is the graph of the comonomer content as a function of the molecular weight of the polymer fractions.

When the distribution curves (molecular weight or comonomer content) from these fractions are superimposed to obtain the molecular weight distribution curve or the comonomer content distribution curve of the final first polypropylene (PP-1), i.e. the final first propylene homopolymer (H-PP1) or the final first random propylene copolymer (R-PP1), these curves may show two or more maxima or at least be distinctly broadened when compared with curves for the individual fractions. Such a polymer, produced in two or more serial steps, is called bimodal or multimodal, depending on the number of steps.

In case the first polypropylene (PP-1) is a first propylene homopolymer (H-PP1), said first propylene homopolymer (H-PP1) may be multimodal or bimodal in view of the molecular weight. In turn in case the first polypropylene (PP-1) is a first random propylene copolymer (R-PP1), said first random propylene copolymer (R-PP1) may be multimodal, like bimodal, in view of the comonomer content and/or molecular weight. It is in particular appreciated that the first random propylene copolymer (R-PP1) is multimodal, like bimodal, in view of the comonomer content.

Further in case the first polypropylene (PP-1) is of multimodal, like bimodal, character, in particular multimodal, like bimodal, in view of the comonomer content, it is appreciated that the individual fractions are present in amounts influencing the properties of the material. Accordingly it is appreciated that each of these fractions is at least present in the amount of 10 wt.-% based on the first polypropylene (PP-1). Accordingly in case of a bimodal system, in particular in view of the comonomer content, the split of the two fractions is roughly 50: 50. Thus in one embodiment the first polypropylene (PP-1) comprises two fractions which differ in their comonomer content, like ethylene content, wherein the first fraction is present from 40 to 60 wt.-% and the second fraction from 60 to 40 wt.-%.

Thus a first fraction (A) of the first polypropylene (PP-1), preferably of the first propylene homopolymer (H-PP1) or of the first random propylene copolymer (R-PP1), is produced in a first reactor (R-1A), being preferably a loop reactor, and subsequently a second fraction (B) of the first polypropylene (PP-1), preferably of the first propylene homopolymer (H-PP1) or of the first random propylene copolymer (R-PP1), is produced in a second reactor (R-1B), being preferably a first gas phase reactor.

Preferably the first fraction (A) has a higher melt flow rate $MFR_2$ (230 °C) than the melt flow rate $MFR_2$ (230 °C) of the second fraction (B), said melt flow rates $MFR_2$ (230 °C) are measured according ISO 1133. Alternatively or additionally in case the first polypropylene (PP-1) is the first random propylene copolymer (R-PP1) the fraction (A) has a lower comonomer content than the fraction (B). Even more preferred in case the first polypropylene (PP-1) is the first random propylene copolymer (R-PP1) the fraction (A) is a propylene homopolymer whereas the fraction (B) is a random propylene copolymer.

In one preferred embodiment the first polypropylene (PP-1) is a first propylene homopolymer (H-PP1), which has been produced in two reactors, i.e. in a slurry reactor, preferably in a loop reactor, and subsequently in a gas phase reactor, and which comprises two different fractions (A) and (B). Said fractions preferably differ in their molecular weight, expressed by different melt flow behaviour. Thus it is especially appreciated that the first polypropylene (PP-1) is a first propylene homopolymer (H-PP1) comprising, preferably consisting of, a first fraction (A), said first fraction (A) is produced in a first reactor (R-1A), being preferably a loop reactor, and subsequently a second fraction (B), said second fraction (B) is produced in a first reactor (R-1B), being preferably a first gas phase reactor. Preferably the fraction (A) of the first propylene homopolymer (H-PP1) has a melt flow rate $MFR_2$ (230 °C) in the range of 1.0 to 500 g/10min, more preferably in the range of 20 to 300 g/10min and the second fraction (B) has melt flow rate $MFR_2$ (230 °C) in the range of 0.5 to 400 g/10min, more preferably in the range of 1.0 to 200 g/10min, with the proviso that the melt flow rate $MFR_2$ (230 °C) of fraction (A) is higher than the melt flow rate $MFR_2$ (230 °C) of fraction (B). The melt flow rate $MFR_2$ (230 °C) of fraction (B) is calculated by formula (I) wherein

$$\left[\frac{MFR(HPP1)^{-0.197} - w(A) \times MFR(A)^{-0.197}}{w(B)}\right]^{-\frac{1}{0.197}} = MFR(B) \quad (I)$$

| | |
|---|---|
| w(A) | is the weight fraction of the fraction (A) in the first propylene homopolymer (H-PP1), |
| w(B) | is the weight fraction of the fraction (B) in the first propylene homopolymer (H-PP1), |
| MFR(HPP1) | is the melt flow rate $MFR_2$ (230 °C) [in g/10min] measured according ISO 1133 of the first propylene homopolymer (H-PP1), |
| MFR(A) | is the melt flow rate $MFR_2$ (230 °C) [in g/10min] measured according ISO 1133 of the fraction (A), |
| MFR(B) | is the calculated melt flow rate $MFR_2$ (230 °C) [in g/10min] of the fraction (B). |

In case the first polypropylene (PP-1) is a first random propylene copolymer (R-PP1) it can be produced in one or two reactors as mentioned above. Even more preferred said first random propylene copolymer (R-PP1) comprises, e.g. consists of, two different fractions (A) and (B) having different comonomer contents. Preferably the first random propylene copolymer (R-PP1) comprises at least two fractions (A) and (B), more preferably consists of two fractions (A) and (B), that have a comonomer content, like ethylene content, which differ of at least 0.8 wt.-%, more preferably differ of at least 1.2 wt.-%. On the other hand the difference in the comonomer content in the two fractions (A) and (B) should be not too high, i.e. not higher than 6.0 wt.-%, preferably not higher than 5.0 wt%, to avoid any separation tendencies. Thus it is appreciated that the first random propylene copolymer (R-PP1) comprises at least two fractions (A) and (B), more preferably consists of two fractions (A) and (B), that have comonomer contents which differ of 2.0 to 6.0 wt.-%, more preferably of 2.5 to 5.0 wt.-%. Accordingly in one embodiment the first random propylene copolymer (R-PP) comprises, preferably consists of, a first fraction (A) being a propylene homopolymer and a second fraction being a random propylene copolymer having a comonomer content, preferably ethylene content, of at least 0.5 wt.-%, more preferably of at least 1.5 wt.-%, like of at least 2.0 wt.-%, e.g. of at least 2.5 wt.-%. The comonomer content of fraction (B) is calculated by formula (II)

$$\frac{C(RRP1) - w(A) \times C(A)}{w(B)} = C(B) \quad (II)$$

| | |
|---|---|
| w(A) | is the weight fraction of the fraction (A) in the first random propylene copolymer (R-PP1), |
| w(B) | is the weight fraction of the fraction (B) in the first random propylene copolymer (R-PP1), |
| C(RPP1) | is the comonomer content [in wt.-%] measured by Fourier transform infrared spectroscopy (FTIR) of the first random propylene copolymer (R-PP1), |
| C(A) | is the comonomer content [in wt.-%] measured by Fourier transform infrared spectroscopy (FTIR) of the fraction (A), |
| C(B) | is the calculated comonomer content [in wt.-%] of the fraction (B). |

After the preparation of the first polypropylene (PP-1), said first polypropylene (PP-1) is transferred in a second reactor (R-2). The second reactor (R-2) is preferably a gas phase reactor. In the second reactor and in the presence of the first polypropylene (PP-1) a second polypropylene (PP-2) is produced thereby obtaining a first polypropylene composition (PPC-1).

The first polypropylene composition (PPC-1) has a rather high amount of xylene cold solubles (XCS). Accordingly it is preferred that the xylene cold soluble (XCS) content measured according to ISO 6427 is of at least 5.0 wt.-%, preferably of at least 15 wt.-%. As explained in detail below the produced polypropylene composition (PPC-F) is either a random polypropylene (R-PP) or a heterophasic propylene copolymer (HECO), the latter being preferred. Depending which type of polymer is produced the xylene cold soluble (XCS) content of the second polypropylene composition (PPC-2) can vary in a broad range. Accordingly in case the produced polypropylene composition (PPC-F) is a random polypropylene (R-PP) the xylene cold soluble (XCS) content of the second polypropylene composition (PPC-2) is in the range of 4.0 to 20 wt.-%, more preferably in the range of 5.0 to 18 wt.-%. On the other hand if the produced polypropylene composition (PPC-F) is a heterophasic propylene copolymer (HECO) than in the second reactor (R-2) an elastomeric phase is produced. With other words the second polypropylene (PP-2) is a first elastomeric polypropylene (E-PP1) and thus also the xylene cold soluble (XCS) content of the first polypropylene composition (PPC-1) is comparatively high e.g. the xylene cold soluble (XCS) content of the first polypropylene composition (PPC-1) is in the range of 10.0 to 60 wt.-%, more preferably in the range of 12.0 to 40 wt.-%, like 13.0 to 25.0 wt.-%.

Additionally the first polypropylene composition (PPC-1) is further defined by its amorphous phase. This applies in particular in cases where the final polypropylene composition (PPC-F) is a heterophasic propylene copolymer (HECO). Accordingly it is preferred that the comonomer content in the amorphous fraction (AM) of the xylene cold soluble (XCS) fraction of the first polypropylene composition (PPC-1), i.e. of the first elastomeric propylene copolymer (E-PP1), measured by Fourier transform infrared spectroscopy is of at least 25 wt.-%, more preferably at least 30 wt.-%, yet more preferably in the range of 25 to 60 wt.-%, still yet more preferably in the range of 30 to 56 wt.-%.

In case the first polypropylene composition (PPC-1) is featured by a rather low intrinsic viscosity (IV) of the amorphous part (AM) of its xylene cold soluble (XCS) fraction processability as well as visual properties are improved. Accordingly it is appreciated that the amorphous part (AM) of the xylene cold soluble (XCS) fraction of the first polypropylene composition (PPC-1) has an intrinsic viscosity (IV) of not more than 4.5 dl/g, more preferably below 4.0 dl/g, yet more preferably below 3.5 dl/g, still yet more preferably in the range of 0.5 to 4.0 dl/g, like in the range of 1.0 to 3.5 dl/g. This values apply in particular for a first polypropylene composition (PPC-1) being part of a heterophasic propylene copolymer (HECO).

Finally the first polypropylene composition (PPC-1) is featured by rather high amount of comonomer content. The comonomers arise from the second polypropylene (PP-2) and optionally from the first polypropylene (PP-1) in case said first polypropylene composition (PPC-1) is a first random propylene copolymer (R-PP1). Accordingly the comonomers within the first polypropylene composition (PPC-1) are $C_2$ to $C_{20}$ $\alpha$-olefins other than propylene, preferably at least one $\alpha$-olefin selected from the group consisting of ethylene, 1-butene, 1-pentene, 1-hexene and 1-octene, more preferably ethylene and/or 1-butene, yet more preferably ethylene. The total amount of comonomers, i.e. units derived from $C_2$ to $C_{20}$ $\alpha$ -olefins other than propylene, preferably ethylene, in the first polypropylene composition (PPC-1), is in the range of 3.0 to 25.0 wt.-%, more preferably 3.5 to 20.0 wt.-%, still more preferably 4.0 to 15.0 wt.-%. In the event that the second polypropylene (PP-2) is a second random propylene copolymer (R-PP2) the comonomer content of said first polypropylene composition (PPC-1) is preferably in the range of 3.0 to 10.0 wt.-%, like 3.5 to 8.0 wt.-%. On the other hand in case the second polypropylene (PP-2) is a first elastomeric propylene copolymer (E-PP1) the comonomer content of the first polypropylene composition (PPC-1) is preferably in the range of 8.0 to 25.0 wt.-%, like 12.0 to 20.0 wt.-%.

As mentioned above the properties of the first polypropylene composition (PPC-1) depend very much on which final polypropylene composition (PPC-F) shall be produced. The same holds automatically true for the second polypropylene (PP-2) part of the first polypropylene composition (PPC-1). The second polypropylene (PP-2) is the comonomer rich polypropylene of the final polypropylene composition (PPC-F). Thus the second polypropylene (PP-2) is a propylene copolymer comprising units of

(i) propylene and
(ii) at least one $C_2$ to $C_{20}$ $\alpha$-olefin other than propylene (so called comonomer), preferably at least one $\alpha$-olefin selected from the group consisting of ethylene, 1-butene, 1-pentene, 1-hexene and 1-octene, more preferably ethylene and/or 1-butene, yet more preferably ethylene.

Accordingly the second polypropylene (PP-2) may comprise units derived from propylene, ethylene and optionally at least another $C_4$ to $C_{10}$ $\alpha$-olefin. In one specific aspect of the present invention the second polypropylene (PP-2) comprises units derived from propylene, ethylene and optionally at least another $\alpha$-olefin selected from the group consisting of $C_4$ $\alpha$ -olefin, $C_5$ $\alpha$-olefin, $C_6$ $\alpha$-olefin, $C_7$ $\alpha$-olefin, $C_8$ $\alpha$-olefin, $C_9$ $\alpha$-olefin and $C_{10}$ $\alpha$-olefin. More preferably the second polypropylene (PP-2) comprises units derived from propylene, ethylene and optionally at least another $\alpha$-olefin selected from the group consisting of 1-butene, 1-pentene, 1-hexene, 1-heptene, 1-octene, 1-nonene and 1-decene, wherein 1-butene and 1-hexene are preferred. It is in particular preferred that the second polypropylene (PP-2) consists of units derived from propylene and ethylene.

The amount of comonomer within the second polypropylene (PP-2) shall be rather high, i.e. at least 9.0 wt.-%, more preferably at least 15.0 wt.-%. In case the second polypropylene (PP-2) is a second random propylene copolymer (R-PP2) the comonomer content, in particular the ethylene content, is in the range of 9.0 to 15.0 wt.-%, more preferably in the range of 10.0 to 14.0 wt.-%. On the other hand in case the second polypropylene (PP-2) is dispersed in the first polypropylene (PP-1), i.e. the final polypropylene is a heterophasic propylene copolymer (HECO), then the comonomer content within the second polypropylene (PP-2) is even higher. Accordingly in case the second polypropylene is a first elastomeric propylene copolymer (E-PP1) the comonomer content, preferably the ethylene content, is preferably at least 15.0 wt.-%, more preferably at least 20.0 wt.-%, yet more preferably in the range of 20.0 to 60 wt.-%, still more preferably in the range of 25.0 to 55.0 wt.-%. The comonomer content of the second polypropylene (PP-2) is calculated by formula (III)

$$\frac{C(PPC1) - w(PP1)x\,C(PP1)}{w(PP2)} = C(PP2) \quad (III)$$

wherein

w(PP1)      is the weight fraction of the first polypropylene (PP-1) in the first polypropylene composition (PPC-1),
w(PP2)      is the weight fraction of the second polypropylene (PP-2) in the first polypropylene composition (PPC-1),
C(PPC1)   is the comonomer content [in wt.-%] measured by Fourier transform infrared spectroscopy (FTIR) of the first polypropylene composition (PPC-1),
C(PP1)     is the comonomer content [in wt.-%] measured by Fourier transform infrared spectroscopy (FTIR) of the first polypropylene (PP-1),
C(PP2)     is the calculated comonomer content [in wt.-%] of the second polypropylene (PP-2).

As indicated above the second polypropylene (PP-2) is comonomer rich. Accordingly the second polypropylene (PP-2) is also featured by a rather high amount of xylene cold soluble (XCS) content, i.e. the second polypropylene (PP-2) has an xylene cold soluble (XCS) content of at least 4.0 wt.-%, more preferably of at least 5.0 wt.-%. In the event the second polypropylene (PP-2) is a second random propylene copolymer (R-PP2) the xylene cold soluble (XCS) content ranges from 4.0 to 15.0 wt.-%, more preferably from 5.0 to 12.0 wt.-%. On the other hand in case the second polypropylene (PP-2) is a first elastomeric propylene copolymer (E-PP1) the xylene cold soluble (XCS) content is at least 85.0 wt.-%, more preferably at least 90.0 wt.-%, yet more preferably at least 95.0 wt.-%, still more preferably at least 99.0 wt.-%. The xylene cold soluble (XCS) of the second polypropylene (PP-2) is calculated by formula (IV)

$$\frac{XCS(PPC1) - w(PP1)\,x\,XCS(PP1)}{w(PP2)} = XCS(PP2) \quad (IV)$$

wherein

w(PP1)        is the weight fraction of the first polypropylene (PP-1) in the first polypropylene composition (PPC-1),
w(PP2)        is the weight fraction of the second polypropylene (PP-2) in the first polypropylene composition (PPC-1),
XCS(PPC1)   is the xylene cold soluble (XCS) content [in wt.-%] measured according ISO 6427 of the first polypropylene composition (PPC-1),
XCS(PP1)     is the xylene cold soluble (XCS) content [in wt.-%] measured according ISO 6427 of the first polypropylene (PP-1),
XCS(PP2)     is the calculated xylene cold soluble (XCS) content [in wt.-%] of the second polypropylene (PP-2).

The second polypropylene (PP-2) is further featured by its amorphous fraction. This is in particular the case for the preparation of a heterophasic propylene copolymer (HECO). In the present invention it is presumed that the first polypropylene (PP-1) does not contain remarkably amounts of amorphous fraction. Accordingly as a first approximation the comonomer content and the intrinsic viscosity (IV) measured for the second polypropylene composition (PPC-2) belongs actually to the second polypropylene (PP-2) being part of the first polypropylene composition (PPC-1). Thus in the instant invention the comonomer content of the amorphous part (AM) of the xylene cold soluble (XCS) fraction of the second polypropylene (PP-2) is identical with the measured comonomer content of the amorphous part (AM) of the xylene cold soluble (XCS) fraction of the first polypropylene composition (PPC-1). The same holds true for the intrinsic viscosity (IV), i.e. the intrinsic viscosity (IV) of the amorphous part (AM) of the xylene cold soluble (XCS) fraction of the second polypropylene (PP-2) is identical with the measured intrinsic viscosity (IV) of the amorphous part (AM) of the xylene cold soluble (XCS) fraction of the first polypropylene composition (PPC-1). Accordingly it is preferred that the comonomer content in the amorphous fraction (AM) of the xylene cold soluble (XCS) fraction of the second polypropylene (PP-2) is at least 25 wt.-%, more preferably at least 30 wt.-%, yet more preferably in the range of 25 to 60 wt.-%, still yet more preferably in the range of 30 to 56 wt.-%. On the other hand the amorphous part (AM) of the xylene cold soluble (XCS) fraction of the second polypropylene (PP-2) has an intrinsic viscosity (IV) of not more than 4.5 dl/g, more preferably below 4.0 dl/g, yet more preferably below 3.5 dl/g, still yet more preferably in the range of 0.5 to 4.0 dl/g, like in the range of 1.0 to 3.5 dl/g. This values apply in particular for a second polypropylene (PP-2) being a first elastomeric propylene copolymer (E-PP1) and said first elastomeric propylene copolymer (E-PP1) is part of a heterophasic propylene copolymer (HECO).

After the preparation of the first polypropylene composition (PPC-1), said first polypropylene composition (PPC-1) is transferred into a third reactor (R-3). The third reactor (R-3) is preferably a gas phase reactor. In the third reactor (R-3) and in the presence of the first polypropylene composition (PPC-1) a third polypropylene (PP-3) is produced thereby obtaining the final polypropylene composition (PPC-F).

The finding of the present invention is in particular that the comonomer rich polypropylene material produced in the second reactor (R-2) must be "coated" with a polymer improving the flowability of the final polypropylene composition (PPC-F). The second polypropylene (PP-2) as defined above is the comonomer rich polypropylene fraction of the final polypropylene composition (PPC-F) and thus prone to stick on walls or to agglomerate. Thus even though it is in principle possible to produce very comomer rich polypropylene, an upper limit is set by the enhanced stickiness of such materials and thus are not in larger scales producible as they tend to clog or at least sheet the transfer lines or bins of the overall system. To overcome this problem it is necessary to produce at the end of the reactor sequence a polymer fraction being less sticky compared to the second polypropylene (PP-2) produced in the second reactor (R-2).

Depending on the final polypropylene composition (PPC-F) the third polypropylene (PP-3) can be selected accordingly. At all events the comonomer content of the third polypropylene (PP-3) is preferably below 60, more preferably 40 wt.-%, yet more preferably below 30 wt.-%. Thus in case the third polypropylene (PP-3) contains comonomers, the third polypropylene (PP-3) is preferably a propylene copolymer comprising units of

(i) propylene and
(ii) at least one $C_2$ to $C_{20}$ $\alpha$-olefin other than propylene (so called comonomer), preferably at least one $\alpha$-olefin selected from the group consisting of ethylene, 1-butene, 1-pentene, 1-hexene and 1-octene, more preferably ethylene and/or 1-butene, yet more preferably ethylene.

Accordingly the third polypropylene (PP-3) may comprise units derived from propylene, ethylene and optionally at least another $C_4$ to $C_{10}$ $\alpha$-olefin. In one specific aspect of the present invention the third polypropylene (PP-3) comprises units derived from propylene, ethylene and optionally at least another $\alpha$-olefin selected from the group consisting of $C_4$ $\alpha$-olefin, $C_5$ $\alpha$-olefin, $C_6$ $\alpha$-olefin, $C_7$ $\alpha$-olefin, $C_8$ $\alpha$-olefin, $C_9$ $\alpha$-olefin and $C_{10}$ $\alpha$-olefin. More preferably the second polypropylene (PP-2) comprises units derived from propylene, ethylene and optionally at least another $\alpha$-olefin selected from the group consisting of 1-butene, 1-pentene, 1-hexene, 1-heptene, 1-octene, 1-nonene and 1-decene, wherein 1-butene and 1-hexene are preferred. It is in particular preferred that the third polypropylene (PP-3) consists of units derived from propylene and ethylene.

In case the final polypropylene composition (PPC-F) is a random propylene copolymer (R-PP), the third polypropylene (PP-3) is either a second propylene homopolymer (H-PP2) or a third random propylene copolymer (R-PP3) with rather low comonomer content, i.e. with a comonomer content below the comonomer content of the second polypropylene copolymer (PP-2). Of course such a polypropylene is also suitable in case the final polypropylene composition (PPC-F) is a heterophasic propylene copolymer (HECO). Especially good results are achievable with a third polypropylene (PP-3) being a second propylene homopolymer (H-PP2). In case the third polypropylene (PP-3) is a third random propylene copolymer (R-PP3) it shall have a comonomer content not exceeding 7.0 wt.-%, more preferably not exceeding 5.0 wt.-%, yet more preferably in the range of 0.5 to 7.0 wt.-%, like 0.5 to 4.0 wt.-%. On the other hand in case the final polypropylene composition is a heterophasic propylene copolymer (HECO), the third polypropylene (PP-3) can be also a second elastomeric propylene copolymer (E-PP2) being dispersed within the first polypropylene (PP-1). Also the second elastomeric propylene copolymer (E-PP2) has preferably a lower comonmer content than the second polypropylene (PP-2). The amount of comonomer within the second elastomeric propylene copolymer (E-PP2) is preferably at least 15.0 wt.-%, more preferably at least 20.0 wt.-%, yet more preferably in the range of 20.0 to 60 wt.-%, still more preferably in the range of 25.0 to 55.0 wt.-%. The comonomer content of the third polypropylene (PP-3), i.e. of the third random propylene copolymer (R-PP3) or the second elastomeric propylene copolymer (E-PP2), is calculated by formula (V)

$$\frac{C(RRPF) - w(PPC1) \, x \, C(PPC1)}{w(PP3)} = C(PP3) \quad (V)$$

wherein

w(PPC1)   is the weight fraction of the first polypropylene composition (PPC-1) in the final polypropylene composition (PPC-F),

w(PP3)   is the weight fraction of the third polypropylene (PP-3) in the final polypropylene composition (PPC-F),

C(PPCF)   is the comonomer content [in wt.-%] measured by Fourier transform infrared spectroscopy (FTIR) of the final polypropylene composition (PPC-F),

C(PPC1)   is the comonomer content [in wt.-%] measured by Fourier transform infrared spectroscopy (FTIR) of the first polypropylene composition (PPC-1),

C(PP3)   is the calculated comonomer content [in wt.-%] of the third polypropylene (PP-3), e.g. the third random propylene copolymer (R-PP3) or the second elastomeric propylene copolymer (E-PP2).

Additionally or alternatively the second propylene homopolymer (H-PP2) or the third random propylene copolymer (R-PP3), is featured by a rather low xylene cold soluble (XCS) content. Thus it is preferred that the third polypropylene (PP-3) being a second propylene homopolymer (H-PP2) or a third random propylene copolymer (R-PP3) has a xylene cold soluble (XCS) content not exceeding 4.0 wt.-%, preferably not exceeding 3.5 wt.-%, more preferably in the range of 0.5 to 4.0 wt.-%, like 0.5 to 3.5 wt.-%. In case the third polypropylene (PP-3) is a second propylene homopolymer (H-PP2) it is in particular appreciated that said second propylene homopolymer (H-PP2) has a xylene cold soluble (XCS) content not exceeding 3.5 wt.-%, preferably not exceeding 3.0 wt.-%, more preferably in the range of 0.5 to 3.5 wt.-%, like 0.5 to 3.0 wt.-%. On the other hand in case the third polypropylene (PP-3) is a third random propylene copolymer (R-PP3), said third random propylene copolymer (R-PP3) has preferably a xylene cold soluble (XCS) content not exceeding 4.0 wt.-%, preferably not exceeding 3.5 wt.-%, more preferably in the range of 1.0 to 4.0 wt.-%, like 1.0 to 3.5 wt.-%.

As already mentioned above the third polypropylene (PP-3) can be also a second elastomeric propylene copolymer (E-PP2), in case the final polypropylene (PPC-F) is a heterophasic propylene copolymer (HECO). In such an event the xylene cold soluble (XCS) content of the third polypropylene (PP-3), e.g. the second elastomeric propylene copolymer (E-PP2), is at least 85.0 wt.-%, more preferably at least 90.0 wt.-%, yet more preferably at least 95.0 wt.-%, still more preferably at least 99.0 wt.-%. The xylene cold soluble (XCS) of the third polypropylene (PP-3) is calculated by formula (VI)

$$\frac{XCS(PPCF) - w(PPC1) \, x \, XCS(PPC1)}{w(PP3)} = XCS(PP3) \quad (VI)$$

wherein

w(PPC1)   is the weight fraction of the first polypropylene composition (PPC-1) in the final polypropylene composition (PPC-F),

w(PP3)   is the weight fraction of the third polypropylene (PP-3) in the final polypropylene composition (PPC-F),

XCS(PPCF)   is the xylene cold soluble (XCS) content [in wt.-%] measured according ISO 6427 of the final polypropylene composition (PPC-F),

XCS(PPC1)   is the xylene cold soluble (XCS) content [in wt.-%] measured according ISO 6427 of the first polypropylene composition (PPC-1),

XCS(PP3)   is the calculated xylene cold soluble (XCS) content [in wt.-%] of the third polypropylene (PP-3).

As mentioned above the third polypropylene (PP-3) can be of different type as long as it is suitable to improve the flowabiliy of final polypropylene composition (PPC-F). Accordingly in case the final polypropylene composition (PPC-F) is a heterophasic propylene copolymer (HECO) than the third polypropylene (PP-3) can be also a second elastomeric propylene copolymer (E-PP2). Preferably the third polypropylene (PP-3) being a second elastomeric propylene copolymer (E-PP2) is further featured by the properties of the amorphous phase.

The intrinsic viscosity (IV) of the amorphous phase (AM) of the xylene cold soluble (XCS) fraction of the second elastomeric propylene copolymer (E-PP2) is preferably higher compared to the intrinsic viscosity (IV) of the amorphous phase (AM) of the xylene cold soluble (XCS) fraction of the second polypropylene (PP-2). More preferably the intrinsic viscosity (IV) of the amorphous phase (AM) of the xylene cold soluble (XCS) fraction of the second elastomeric propylene copolymer (E-PP2) is at least 3.0 dl/g, like at least 6.0 dl/g, yet more preferably is at least 7.0 dl/g, still more preferably in the range of 6.0 to 15.0 dl/g, still yet more preferably in the range of 7.0 to 14.0 dl/g. The intrinsic viscosity (IV) of the amorphous phase (AM) of the xylene cold soluble (XCS) fraction of the second elastomeric propylene copolymer (E-PP2) is calculated by formula (VII)

$$\frac{IV(PPCF) - w(PPC1)x\, IV(PPC1)}{w(PP3)} = IV(PP3) \quad (VII)$$

wherein

w(PPC1)    is the weight fraction of the first polypropylene composition (PPC-1) in the the final polypropylene composition (PPC-F),

w(PP3)    is the weight fraction of the third polypropylene (PP-3) in the final polypropylene composition (PPC-F),

IV(PPCF)    is the intrinsic viscosity (IV) [in dl/g] of the amorphous part (AM) of the xylene cold soluble (XCS) fraction of the final polypropylene composition (PPC-F),

IV(PPC1)    is the intrinsic viscosity (IV) [in dl/g] of the amorphous part (AM) of the xylene cold soluble (XCS) fraction of the first polypropylene composition (PPC-1),

IV(PP3)    is the calculated is the intrinsic viscosity (IV) [in dl/g] of the amorphous part (AM) of the xylene cold soluble (XCS) fraction of the third polypropylene (PP-3).

Further it is appreciated that the comonomer content of the amorphous part (AM) of the xylene cold soluble (XCS) fraction of the third polypropylene (PP-3) being a second elastomeric propylene copolymer (E-PP2) is lower compared to the comonomer content of the amorphous part (AM) of the xylene cold soluble (XCS) fraction of the second polypropylene (PP-2) being a first elastomeric propylene copolymer (E-PP1). Thus it is appreciated that the comonomer of the amorphous part (AM) of the xylene cold soluble (XCS) fraction of the second elastomeric propylene copolymer (E-PP2) is preferably below 55.0 wt.-%, more preferably below 50.0 wt.-%, yet more preferably in the range of 10.0 to 50 wt.-%, still more preferably in the range of 15.0 to 45.0 wt.-%. The comonomer content of the amorphous phase (AM) of the xylene cold soluble (XCS) fraction of the second elastomeric polypropylene (E-PP2) is calculated by formula (VIII)

$$\frac{XCS\,(PPCF)\, x\, AC(PPCF) - w(PPC1)\, x\, XCS\,(PPC1)x\, AC(PPC1)}{w(PP3)\, x\, XCS\,(PP3)} = AC(PP3) \quad (VIII)$$

wherein

w(PPC1)    is the weight fraction of the first polypropylene composition (PPC-1) in the the final polypropylene composition (PPC-F),

w(PP3)    is the weight fraction of the third polypropylene (PP-3) in the final polypropylene composition (PPC-F),

XCS(PPCF)    is the xylene cold soluble (XCS) content [in wt.-%] measured according ISO 6427 of the final polypropylene composition (PPC-F),

XCS(PPC1)    is the xylene cold soluble (XCS) content [in wt.-%] measured according ISO 6427 of the first polypropylene composition (PPC-1),

XCS(PP3)    is the calculated (by formula VI) xylene cold soluble (XCS) content [in wt.-%] of the third polypropylene (PP-3),

AC(PPCF)    is the comonomer content [in wt.-%] measured by Fourier transform infrared spectroscopy (FTIR) of the amorphous part (AM) of the xylene cold soluble (XCS) fraction of the final polypropylene composition (PPC-F) produced in the third reactor (R-3),

AC(PPC1)    is the comonomer content [in wt.-%] measured by Fourier transform infrared spectroscopy (FTIR) of the amorphous part (AM) of the xylene cold soluble (XCS) fraction of the first polypropylene composition (PPC-1) produced in the second reactor (R-2),

AC(PP3)    is the calculated comonomer content [in wt.-%] of the third polypropylene (PP-3), e.g. the random propylene copolymer (R-PP3) or the elastomeric propylene copolymer (E-PP2), produced in the third reactor (R-3).

As already indicated above the final polypropylene composition (PPC-F) is featured by a rather high comonomer content, namely by a comonomer content of at least 4.0 wt.-%, more preferably of at least 6.0 wt.-%. Further in case the final polypropylene composition (PPC-F) is a random propylene copolymer (R-PP) the comonomer content is in the range of 4.0 to 15.0 wt.-%, more preferably in the range of 5.0 to 12.0 wt.-%. On the other hand in case the final polypropylene composition (PPC-F) is a heterophasic propylene copolymer (HECO) the comonomer content is preferably more than 6.0, more preferably at least 8.0 wt.-%, yet more preferably in the range of more than 6.0 to 25.0 wt.-%, more preferably in the range of 7.0 to 20.0 wt.-%.

Additionally the final polypropylene composition (PPC-F) can be defined by the amount of xylene cold solubles (XCS). Accordingly it is preferred that the final polypropylene composition (PPC-F) has a xylene cold soluble (XCS) content measured according to ISO 6427 of at least 4.0 wt.-%, preferably of at least 4.5 wt.-%. Further in case the final polypropylene composition (PPC-F) is a random propylene copolymer (R-PP) the xylene cold soluble (XCS) content is in the range of 3.0 to 10.0 wt.-%, more preferably in the range of 3.5 to 9.0 wt.-%. On the other hand in case the final polypropylene composition (PPC-F) is a heterophasic propylene copolymer (HECO) the xylene cold soluble (XCS) content is preferably more than 15.0, more preferably at least 20.0 wt.-%, yet more preferably in the range of more than 15.0 to 55.0 wt.-%, more preferably in the range of 20.0 to 50.0 wt.-%.

The split between the individual polypropylenes part of the final polypropylene composition (PPC-F) is preferably as follows:

The weight ratio between the first polypropylene (PP-1) to the second polypropylene (PP-2) is preferably from 40:60 to 80:20, more preferably 50:50 to 70:30.

The weight ratio between the second polypropylene (PP-2) to the third polypropylene (PP-3) is preferably from 50:50 to 95:5, more preferably from 60:40 to 75:25.

The weight ratio between the first polypropylene composition (PPC-1) to the third polypropylene (PP-3) is from 50:50 to 95:5, more preferably from 60:40 to 75:25.

Accordingly it is appreciated that the final polypropylene composition (PPC-F) comprises

(a) 34 to 48 wt.-%, more preferably 40 to 45 wt.-%, of first polypropylene (PP-1)
(b) 34 to 48 wt.-%, more preferably 40 to 45 wt.-%, of second polypropylene (PP-2)
(c) 4 to 32 wt.-%, more preferably 10 to 20 wt.-%, of third polypropylene (PP-3)

The reaction conditions are well known in the art and not particular subject of this application. The reaction conditions are in particular chosen in such a way that the above defined properties of the individual polypropylenes, i.e. final polypropylene composition (PPC-F), first polypropylene (PP-1), first polypropylene composition (PPC-1), second polypropylene (PP-2) and third polypropylene (PP-3), are obtained.

For instance, in the slurry reactor the temperature is preferably from 40 to 110°C, preferably between 50 and 95 °C, in particular between 60 and 90 °C, with a pressure in the range of from 20 to 80 bar, preferably 30 to 60 bar, with the option of adding - if present- the comonomer and if desired hydrogen in order to control the molecular weight in a manner known per se.

As indicated above the first polypropylene (PP-1) can be produced in a slurry reactor and subsequently in a gas phase reactor. Typically in said gas phase reactor - if used - the temperature preferably is within the range of from 50 to 130 °C, more preferably 60 to 100 °C, at a pressure in the range of from 5 to 50 bar, preferably 8 to 35 bar, again with the option of adding hydrogen in order to control the molecular weight in a manner known per se.

The residence time can vary in the reactor zones identified above. In one embodiment, the residence time in the slurry reactor, for example a loop reactor, is in the range of from 0.5 to 5 hours, for example 0.5 to 2 hours, while the residence time in the gas phase reactor generally will be from 1 to 8 hours.

The reaction temperature preferably used in the reactors, preferably used in the gas phase reactors, in which the second polypropylene (PP-2) and third polypropylene (PP-3), respectively, is produced, is in the range 60 to 115 °C, preferably 70 to 90 °C. The reactor pressure is preferably higher than 8 bars, more preferably higher than 15 bars, and preferably in the range of 8 to 30 bar, like 15 to 30 bar, and the residence time is preferably 0.3 to 2.0 hours.

The polymerization may be achieved using any standard olefin polymerization catalyst and these are well known to the person skilled in the art. Preferred catalyst systems comprise an ordinary stereospecific Ziegler-Natta catalyst, metallocene catalysts and other organometallic or coordination catalysts. A particularly preferred catalyst system is a high yield Ziegler-Natta catalyst having a catalyst component and optionally an external donor. The catalyst system may thus contain a titanium compound and an electron-donor compound supported on an activated magnesium dichloride, a trialkylaluminium compound as activator and an electron donor compound.

A further preferred catalyst system is a metallocene catalyst having a bridged structure giving high stereoselectivity and which as an active complex is impregnated on a carrier.

Suitable catalyst systems are described in for example, EP 0 491 566, EP 0 586 390 and WO 98/12234 .

A preferred process of the one used herein is the slurry-gas phase process, such as developed by Borealis and known as the Borstar® technology. In this respect, reference is made to EP 0 887 379 A1, WO 92/12182, WO 2004/000899, WO 2004/111095, WO 99/24478, WO 99/24479 and WO 00/68315.

In the following preferred embodiments are described in more detail. In one preferred aspect the inventive process is applied for the preparation of a final polypropylene composition (PPC-F) being a heterophasic propylene copolymer (HECO). Accordingly the invention is directed to the process for the preparation of a heterophasic propylene copolymer (HECO) comprising a matrix (M) in which an elastomeric fraction (E) is dispersed. The first polypropylene (PP-1) constitutes the matrix (M) whereas the second polypropylene (PP-2) is part of the elastomeric fraction (E). Accordingly the second polypropylene (PP-2) is a first elastomeric propylene copolymer (E-PP1). Additionally the third polypropylene (PP-3) can be either part of the matrix (M) or the part of the elastomeric phase (E). In case the third polypropylene (PP-3) is a third random propylene copolymer (R-PP3) or a second propylene homopolymer (H-PP2), the latter being preferred, said third random propylene copolymer (R-PP3) or said second propylene homopolymer (H-PP3) is part of the matrix (M). On the other hand in case the third polypropylene (PP-3) is a second elastomeric propylene copolymer (E-PP2) than said second elastomeric propylene copolymer (E-PP2) is part of the elastomeric phase (E). Concerning the definitions of the individual polymers it is referred to the information provided above. Thus the present invention is directed to a process for the preparation of a heterophasic polypropylene (HECO), said heterophasic polypropylene (HECO) comprises units derived from

(i) propylene and
(ii) at least one C2 to C20 $\alpha$-olefin other than propylene in an amount of 9.0 to 25 wt.-%, preferably in an amount of 10.0 to 20.0 wt.-%, measured by Fourier transform infrared spectroscopy,

said process comprises the steps of

(a) producing in at least one first reactor (R-1) a first polypropylene (PP-1) being at least part of the matrix (M) of the heterophasic polypropylene (HECO), said first polypropylene (PP-1) has a xylene cold soluble (XCS) content measured according ISO 6427 of not exceeding 4.0 wt.-%, preferably in the range of 0.5 to 3.5 wt.-%, said first polypropylene (PP-1) is
($\alpha$) a first propylene homopolymer (H-PP1) or
($\beta$) a first random propylene copolymer (R-PP1) comprising units derived from

(i) propylene and
(ii) at least one C2 to C20 $\alpha$-olefin other than propylene, preferably at least one $\alpha$-olefin selected from the group consisting of ethylene, 1-butene, 1-pentene, 1-hexene and 1-octene, more preferably ethylene and/or 1-butene, yet more preferably ethylene, in an amount of 0.5 to 4.0 wt.-%, more preferably in an amount of 0.5 to 3.0 wt.-%, measured by Fourier transform infrared spectroscopy,

(b) transferring said first polypropylene (PP-1) in a second reactor (R-2),
(c) producing in the second reactor (R-2) in the presence of the first polypropylene (PP-1) a second polypropylene (PP-2) being a first elastomeric propylene copolymer (E-PP1) thereby obtaining a first polypropylene composition (PPC-1), said first elastomeric propylene copolymer (E-PP1) comprises units derived from

(i) propylene and
(ii) at least one C2 to C20 $\alpha$-olefin other than propylene, preferably at least one $\alpha$-olefin selected from the group consisting of ethylene, 1-butene, 1-pentene, 1-hexene and 1-octene, more preferably ethylene and/or 1-butene, yet more preferably ethylene, in an amount of at least 15.0 wt-%, preferably in an amount of 25 to 55.0 wt.-%,

(d) transferring said first polypropylene composition (PPC-1) to a third reactor (R-3),
(e) producing in the third reactor (R-3) in the presence of the first polypropylene composition (PPC-1) a third polypropylene (PP-3) thereby obtaining the polypropylene composition (PPC-F), wherein

(i) said third polypropylene (PP-3) has a xylene cold soluble (XCS) content of below 9.0 wt.-%, more preferably below 4.0 wt.-% and said third polypropylene (PP-3) is
($\alpha$) a second propylene homopolymer (H-PP2) or
($\beta$) a third random propylene copolymer (R-PP3) comprising units derived from

(i) propylene and
(ii) at least one C2 to C20 $\alpha$-olefin other than propylene, preferably at least one $\alpha$-olefin selected from the group consisting of ethylene, 1-butene, 1-pentene, 1-hexene and 1-octene, more preferably ethylene and/or 1-butene, yet more preferably ethylene, in an amount of 0.5 to 4.0 wt.-%, more preferably in an amount of 0.5 to 3.0 wt.-%,

or

(ii) said third polypropylene (PP-3) is a second elastomeric propylene copolymer (E-PP2), the intrinsic viscosity (IV) of the amorphous part (AM) of the xylene cold soluble (XCS) fraction of said second elastomeric propylene copolymer (E-PP2) is higher compared to intrinsic viscosity (IV) of the amorphous part (AM) of the xylene cold soluble (XCS) fraction of the first elastomeric propylene copolymer (E-PP1), preferably the intrinsic viscosity (IV) of the amorphous part (AM) of the xylene cold soluble (XCS) fraction of said second elastomeric propylene copolymer (E-PP2) is at least 3.0 dl/g, more preferably at least 6.0 dl/g, still more preferably in the range of 6.0 to 15.0 dl/g.

Concerning the further preferred embodiments of the first polypropylene (PP-1) it is referred to the information given above. It is in particular preferred that the first polypropylene (PP-1) is produced in two reactors, in one slurry reactor, i.e. a loop reactor, and subsequently in a gas phase reactor. Even more preferred the first polypropylene (PP-1) is a first propylene homopolymer (H-PP1) produced in two reactors, in one slurry reactor, i.e. a loop reactor, and subsequently in a gas phase reactor. In one embodiment the fraction (A) of the first propylene homopolymer (H-PP1) produced in the slurry reactor has a higher melt flow rate $MFR_2$ (230 °C) than the melt flow rate $MFR_2$ (230 °C) of the second fraction (B) of the first propylene homopolymer (H-PP1) produced in the gas phase reactor. Preferably the fraction (A) of the first propylene homopolymer (H-PP1) has a melt flow rate $MFR_2$ (230 °C) in the range of 1.0 to 500 g/10min, more preferably in the range of 20 to 300 g/10min and the second fraction (B) has melt flow rate $MFR_2$ (230 °C) in the range of 0.5 to 400 g/10min, more preferably in the range of 1.0 to 200 g/10min, with the proviso that the melt flow rate $MFR_2$ (230 °C) of fraction (A) is higher than the melt flow rate $MFR_2$ (230 °C) of fraction (B).

As mentioned above in the second reactor (R-2) of the preparation process of the heterophasic propylene copolymer (HECO) the first elastomeric polypropylene (E-PP1) is produced and thus the xylene cold soluble (XCS) content of the first polypropylene composition (PPC-1) is comparatively high e.g. the xylene cold soluble (XCS) content of the first polypropylene composition (PPC-1) is in the range of 10.0 to 60 wt.-%, more preferably in the range of 12.0 to 40 wt.-%, like 13.0 to 25.0 wt.-%.

Additionally the first polypropylene composition (PPC-1) is featured by rather high amount of comonomer content. The comonomers arise from the second polypropylene (PP-2) being the first elastomeric propylene copolymer (E-PP2) and optionally from the first polypropylene (PP-1) in case said first polypropylene (PP-1) is a first random propylene copolymer (R-PP1). Accordingly the comonomers within the first polypropylene composition (PPC-1) are $C_2$ to $C_{20}$ $\alpha$-olefins other than propylene, preferably at least one $\alpha$-olefin selected from the group consisting of ethylene, 1-butene, 1-pentene, 1-hexene and 1-octene, more preferably ethylene and/or 1-butene, yet more preferably ethylene. The total amount of comonomers, i.e. units derived from $C_2$ to $C_{20}$ $\alpha$-olefins other than propylene, preferably ethylene, in the first polypropylene composition (PPC-1) is preferably in the range of 8.0 to 25.0 wt.-%, like 12.0 to 20.0 wt.-%.

The second polypropylene (PP-2), i.e. the first elastomeric propylene copolymer (E-PP1), is the comonomer rich polypropylene of the final polypropylene composition (PPC-F). Thus the second polypropylene (PP-2), i.e. the first elastomeric propylene copolymer (E-PP1), is a propylene copolymer comprising units of

(i) propylene and
(ii) at least one $C_2$ to $C_{20}$ $\alpha$-olefin other than propylene (so called comonomer), preferably at least one $\alpha$-olefin selected from the group consisting of ethylene, 1-butene, 1-pentene, 1-hexene and 1-octene, more preferably ethylene and/or 1-butene, yet more preferably ethylene.

Accordingly the second polypropylene (PP-2), i.e. the first elastomeric propylene copolymer (E-PP1), may comprise units derived from propylene, ethylene and optionally at least another $C_4$ to $C_{10}$ $\alpha$-olefin. In one specific aspect of the present invention the second polypropylene (PP-2), i.e. the first elastomeric propylene copolymer (E-PP1), comprises units derived from propylene, ethylene and optionally at least another $\alpha$-olefin selected from the group consisting of $C_4$ $\alpha$-olefin, $C_5$ $\alpha$-olefin, $C_6$ $\alpha$-olefin, $C_7$ $\alpha$-olefin, $C_8$ $\alpha$-olefin, $C_9$ $\alpha$-olefin and $C_{10}$ $\alpha$-olefin. More preferably the second polypropylene (PP-2), i.e. the first elastomeric propylene copolymer (E-PP1), comprises units derived from propylene, ethylene and optionally at least another $\alpha$-olefin selected from the group consisting of 1-butene, 1-pentene, 1-hexene, 1-heptene, 1-octene, 1-nonene and 1-decene, wherein 1-butene and 1-hexene are preferred. It is in particular preferred that the second polypropylene (PP-2), i.e. i.e. the first elastomeric propylene copolymer (E-PP1), consists of units derived from propylene and ethylene.

The amount of comonomer, preferably ethylene content, within the second polypropylene (PP-2), i.e. the first elastomeric propylene copolymer (E-PP1), shall be rather high, i.e. at least 15.0 wt.-%, more preferably at least 20.0 wt.-%, yet more preferably in the range of 20.0 to 60 wt.-%, still more preferably in the range of 25.0 to 55.0 wt.-%.

As indicated above the second polypropylene is comonomer rich. Accordingly the second polypropylene (PP-2), i.e. the first elastomeric propylene copolymer (E-PP1), is also featured by a rather high amount of xylene cold soluble (XCS) content, i.e. the first elastomeric propylene copolymer (E-PP1) has an xylene cold soluble content of at least 85.0 wt.-%, more preferably at least 90.0 wt.-%, yet more preferably at least 95.0 wt.-%, still more preferably at least 99.0 wt.-%.

As explained above the amorphous phase of the second polypropylene (PP-2), i.e. the first elastomeric propylene copolymer (E-PP1), is by first approximation identical with the amorphous phase of the first polypropylene composition (PPC-1). Thus in the instant invention it is presumed that the amorphous phase of the second polypropylene (PP-2), i.e. the first elastomeric propylene copolymer (E-PP1), and the first polypropylene composition (PPC-1) are identical.

Accordingly the first polypropylene composition (PPC-1) and the first elastomeric propylene copolymer (E-PP1) are further defined by their amorphous phases. Accordingly it is preferred that the comonomer content in the amorphous fraction (AM) of the xylene cold soluble (XCS) fraction of the first polypropylene composition (PPC-1), i.e. of the first elastomeric propylene copolymer (E-PP1), measured by Fourier transform infrared spectroscopy is of at least 25 wt.-%, more preferably at least 30 wt.-%, yet more preferably in the range of 25 to 60 wt.-%, still yet more preferably in the range of 30 to 56 wt.-%.

Demanding mechanical properties are especially obtainable in case the first polypropylene composition (PPC-1), i.e. the first elastomeric propylene copolymer (E-PP1), is featured by a rather low intrinsic viscosity (IV) of the amorphous part (AM) of its xylene cold soluble (XCS) fraction. Accordingly it is appreciated that the amorphous part (AM) of the xylene cold soluble (XCS) fraction of the first polypropylene composition (PPC-1), i.e. of the first elastomeric propylene copolymer (E-PP1), has an intrinsic viscosity (IV) of not more than 4.5 dl/g, more preferably below 4.0 dl/g, yet more preferably below 3.5 dl/g, still yet more preferably in the range of 0.5 to 4.0 dl/g, like in the range of 1.0 to 3.5 dl/g.

The finding of the present invention is in particular that the comonomer rich polypropylene material produced in the second reactor (R-2) must be "coated" with a polymer improving the flowability of the final polypropylene composition (PPC-F). The second polypropylene (PP-2), i.e. the first elastomeric propylene copolymer (E-PP1), as defined above is the comonomer rich polypropylene fraction of the final polypropylene composition (PPC-F) and thus prone to stick on walls or to agglomerate. Thus even though it is in principle possible to produce very comomer rich polypropylene, an upper limit is set by the enhanced stickiness of such materials and thus are not in larger scales producible as they tend to clog or at least sheet the transfer lines or bins of the overall system. To overcome this problem it is necessary to produce at the end of the reactor sequence a polymer fraction being less sticky compared to the second polypropylene (PP-2), i.e. the first elastomeric propylene copolymer (E-PP1), produced in the second reactor (R-2).

Depending on the final polypropylene composition (PPC-F) the third polypropylene (PP-3) can be selected accordingly. At all events the comonomer content of the third polypropylene (PP-3) is preferably below 60, more preferably 40 wt.-%, yet more preferably below 30 wt.-%. Thus increase the third polypropylene (PP-3) contains comonomers, the third polypropylene (PP-3) is preferably a propylene copolymer comprising units of

   (i) propylene and
   (ii) at least one $C_2$ to $C_{20}$ $\alpha$-olefin other than propylene (so called comonomer), preferably at least one $\alpha$-olefin selected from the group consisting of ethylene, 1-butene, 1-pentene, 1-hexene and 1-octene, more preferably ethylene and/or 1-butene, yet more preferably ethylene.

Accordingly the third polypropylene (PP-3) may comprise units derived from propylene, ethylene and optionally at least another $C_4$ to $C_{10}$ $\alpha$-olefin. In one specific aspect of the present invention the third polypropylene (PP-3) comprises units derived from propylene, ethylene and optionally at least another $\alpha$-olefin selected from the group consisting of $C_4$ $\alpha$-olefin, $C_5$ $\alpha$-olefin, $C_6$ $\alpha$-olefin, $C_7$ $\alpha$-olefin, $C_8$ $\alpha$-olefin, $C_9$ $\alpha$-olefin and $C_{10}$ $\alpha$-olefin. More preferably the third polypropylene (PP-3) comprises units derived from propylene, ethylene and optionally at least another $\alpha$-olefin selected from the group consisting of 1-butene, 1-pentene, 1-hexene, 1-heptene, 1-octene, 1-nonene and 1-decene, wherein 1-butene and 1-hexene are preferred. It is in particular preferred that the third polypropylene (PP-3) consists of units derived from propylene and ethylene.

The third polypropylene (PP-3) is either a second propylene homopolymer (H-PP2) or a third random propylene copolymer (R-PP3) with rather low comonomer content, i.e. with a comonomer content below the comonomer content of the first elastomeric propylene copolymer (E-PP1). Especially good results are achievable with a third polypropylene (PP-3) being a second propylene homopolymer (H-PP2). In case the third polypropylene (PP-3) is a third random propylene copolymer (R-PP3) it shall have a comonomer content not exceeding 7.0 wt.-%, more preferably not exceeding 5.0 wt.-%, yet more preferably in the range of 0.5 to 7.0 wt.-%, like 0.5 to 4.0 wt.-%.

Additionally or alternatively the second propylene homopolymer (H-PP2) or the third random propylene copolymer (R-PP3), is featured by a rather low xylene cold soluble (XCS) content. Thus it is preferred that the third polypropylene (PP-3) being a second propylene homopolymer (H-PP2) or third random propylene copolymer (R-PP3) has a xylene cold soluble (XCS) content not exceeding 4.0 wt.-%, preferably not exceeding 3.5 wt.-%, more preferably in the range of 0.5 to 4.0 wt.-%, like 0.5 to 3.5 wt.-%. In case the third polypropylene (PP-3) is a second propylene homopolymer (H-PP2) it is in particular appreciated that said second propylene homopolymer (H-PP2) has a xylene cold soluble (XCS) content not exceeding 3.5 wt.-%, preferably not exceeding 3.0 wt.-%, more preferably in the range of 0.5 to 3.5 wt.-%, like 0.5 to 3.0 wt.-%. On the other hand in case the third polypropylene (PP-3) is a third random propylene copolymer (R-PP3), said third random propylene copolymer (R-PP3) has preferably a xylene cold soluble (XCS) content not exceeding 4.0 wt.-%, preferably not exceeding 3.5 wt.-%, more preferably in the range of 1.0 to 4.0 wt.-%, like 1.0 to 3.5 wt.-%.

Such second propylene homopolymer (H-PP2) or third random propylene copolymer (R-PP3) is preferably part of the matrix (M) of the heterophasic propylene copolymer (HECO). Thus the matrix (M) preferably comprises, more preferably consists of, the first polypropylene (PP-1) and the third polypropylene (PP-3) being either a second propylene homopolymer (H-PP2) or a third random propylene copolymer (R-PP3) as defined in the instant invention.

Another option is that the third polypropylene (PP-3) is, like the first elastomeric propylene copolymer (E-PP1), also an elastomeric propylene copolymer. Accordingly it is appreciated that the third polypropylene (PP-3) is a second elastomeric propylene copolymer (E-PP2) being preferably dispersed within the matrix (M), i.e. within the first polypropylene (PP-1). Also the second elastomeric propylene copolymer (E-PP2) has preferably a lower comonomer content than the first elastomeric propylene copolymer (E-PP1). The amount of comonomer within the second elastomeric propylene copolymer (E-PP2) is preferably at least 15.0 wt.-%, more preferably at least 20.0 wt.-%, yet more preferably in the range of 20.0 to 60 wt.-%, still more preferably in the range of 25.0 to 55.0 wt.-%.

The xylene cold soluble (XCS) content of the third polypropylene (PP-3), e.g. of the second elastomeric propylene copolymer (E-PP2), is preferably at least 85.0 wt.-%, more preferably at least 90.0 wt.-%, yet more preferably at least 95.0 wt.-%, still more preferably at least 99.0 wt.-%.

The intrinsic viscosity (IV) of the amorphous phase (AM) of the xylene cold soluble (XCS) fraction of the second elastomeric polypropylene (E-PP2) is preferably higher compared to the intrinsic viscosity (IV) of the amorphous phase (AM) of the xylene cold soluble (XCS) fraction of the second elastomeric polypropylene (E-PP2). More preferably the intrinsic viscosity (IV) of the amorphous phase (AM) of the xylene cold soluble (XCS) fraction of the second elastomeric polypropylene (E-PP2) is at least 6.0 dl/g, yet more preferably is at least 7.0 dl/g, still more preferably in the range of 6.0 to 15.0 dl/g, still yet more preferably in the range of 7.0 to 14.0 dl/g.

Further it is appreciated that the comonomer content of the amorphous part (AM) of the xylene cold soluble (XCS) fraction of the second elastomeric polypropylene (E-PP2) is lower compared to the comonomer content of the amorphous part (AM) of the xylene cold soluble (XCS) fraction of the first elastomeric propylene copolymer (E-PP1). Thus it is appreciated that the comonomer of the amorphous part (AM) of the xylene cold soluble (XCS) fraction of the second elastomeric polypropylene (E-PP2) is preferably below 55.0 wt.-%, more preferably below 50.0 wt.-%, yet more preferably in the range of 10.0 to 50 wt.-%, still more preferably in the range of 15.0 to 45.0 wt.-%.

As already indicated above the heteropphasic propylene copolymer (HECO) is featured by a rather high comonomer content, namely by a comonomer content of at least 6.0 wt.-%, more preferably of at least 8.0 wt.-%, yet more preferably in the range of more than 6.0 to 25.0 wt.-%, more preferably in the range of 7.0 to 20.0 wt.%.

Additionally the heteropphasic propylene copolymer (HECO) can be defined by the amount of xylene cold solubles (XCS). Accordingly it is preferred that the heteropphasic propylene copolymer (HECO) has a xylene cold soluble (XCS) content measured according to ISO 6427 of more than 15.0, more preferably at least 20.0 wt.-%, yet more preferably in the range of more than 15.0 to 55.0 wt.-%, more preferably in the range of 20.0 to 50.0 wt.-%.

Concerning the split, i.e. the weight ratio, of between the individual polypropylenes of the heteropphasic propylene copolymer (HECO) it is referred to the information given above. Also concerning the reaction conditions applied in the individual reactors it is referred to the information given above. In case the properties are not direct measurable, the formulas are used as indicated above.

The present invention will now be described in further detail by the examples provided below.

**EXAMPLES**

**1. Definitions/Measuring Methods**

The following definitions of terms and determination methods apply for the above general description of the invention as well as to the below examples unless otherwise defined.

**Quantification of comonomer content/Randomness by FTIR spectroscopy**

Comonomer content (wt%) is determined in a known manner based on Fourier transform infrared spectroscopy (FTIR) determination calibrated with $C^{13}$-NMR.

In the FTIR measurements, films of 250 -mm thickness were compression moulded at 225 °C and investigated on a Perkin-Elmer System 2000 FTIR instrument. The ethylene peak area (760-700 cm$^{-1}$) was used as a measure of total ethylene content. The absorption band for the structure -P-E-P- (one ethylene unit between propylene units), occurs at 733 cm$^{-1}$ This band characterizes the random ethylene content. For longer ethylene sequences (more than two units), an absorption band occurs at 720 cm$^{-1}$. Generally, a shoulder corresponding to longer ethylene runs is observed for the random copolymers. The calibration for total ethylene content based on the area and random ethylene (PEP) content based on peak height at 733 cm$^{-1}$ was made by $^{13}$CNMR. (Thermochimica Acta, 66 (1990) 53-68).

$$\text{Randomness} = \text{random ethylene (-P-E-P-) content / the total ethylene content x } 100\%.$$

**Number average molecular weight ($M_n$), weight average molecular weight ($M_w$) and molecular weight distribution (MWD)** are determined by size exclusion chromatography (SEC) using Waters Alliance GPCV 2000 instrument with online viscometer. The oven temperature is 140 °C. Trichlorobenzene is used as a solvent (ISO 16014).

**MFR$_2$ (230 °C)** is measured according to ISO 1133 (230 °C, 2.16 kg load).

**The xylene solubles (XCS, wt.-%):** Content of Xylene solubles (XCS) is determined at 23 °C according ISO 6427.

2.0 g of polymer is dissolved in 250 ml p-xylene at 135 °C under agitation. After 30 minutes the solution is allowed to cool for 15 minutes at ambient temperature and then allowed to settle for 30 minutes at 25 °C. The solution is filtered with filter paper into two 100 ml flasks.

The solution from the first 100 ml flask is evaporated in nitrogen flow and the residue is dried under vacuum at 90 °C until constant weight is reached.

$$XS\% = (100 \text{ x } m \text{ x } Vo)/(mo \text{ x } v)$$

wherein

mo = initial polymer amount (g),

m = weight of residue (g),

Vo = initial volume (ml),

v = volume of analyzed sample (ml)

**Amorphous fraction of the xylene solubles (AM):**

The solution from the second 100 ml flask in the xylene solubles analysis is treated with 200 ml of acetone under vigorous stirring. The precipitate is filtered and dried in a vacuum oven at 90 °C.

$$AM\% = (100 \text{ x } m1 \text{ x } v0) / (m0 \text{ x } v1),$$

wherein

m0 = initial polymer amount (g),

m1 = weight of precipitate (g),

v0 = initial volume (ml),

v1 = volume of analyzed sample (ml).

**Intrinsic viscosity (IV)** is measured according to DIN ISO 1628/1, October 1999 (in Decalin at 135 °C).

**Flowability**

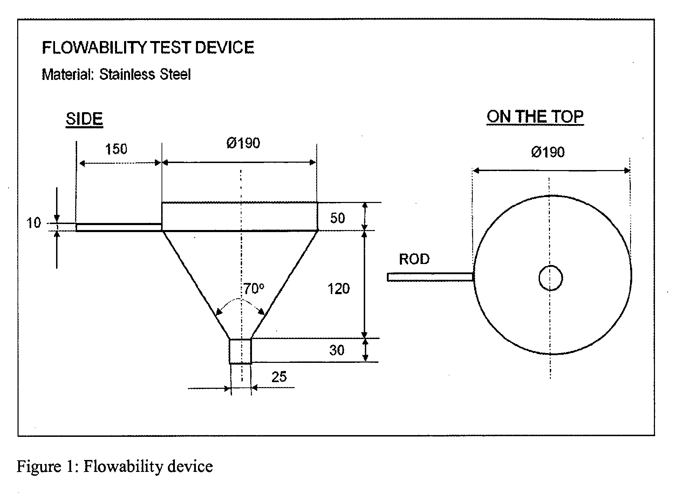

300 ± 0.5 g polymer powder sample was weighed in a decanter. The polymer powder was poured to the other decanter having the same size. This was repeated altogether 5 times. After that the flowability was measured by letting this sample flow through a funnel at room temperature. The time it takes for a sample to flow through is a measurement of stickiness. The average of 3 separate determinations was defined as flowability as a unit second. The dimensions of the funnel made from stainless steel can be seen from Figure 1.

### 2. Preparation of the Examples

#### *Example 1*

Preparation of the catalyst

First, 0.1 mol of $MgCl_2$ x 3 EtOH was suspended under inert conditions in 250 ml of decane in a reactor at atmospheric pressure. The solution was cooled to the temperature of -15°C and 300 ml of cold $TiCl_4$ was added while maintaining the temperature at said level. Then, the temperature of the slurry was increased slowly to 20 °C. At this temperature, 0.02 mol of di(ethylhexyl)phthalate (DOP) was added to the slurry. After the addition of the phthalate, the temperature was raised to 135 °C during 90 minutes and the slurry was allowed to stand for 60 minutes and the catalyst was filtered from the liquid. Then, another 300 ml of $TiCl_4$ was added and the temperature was kept at 135 °C for 120 minutes. After this, the catalyst was filtered from the liquid and washed six times with 300 ml heptane at 80 °C. Then, the solid catalyst component was filtered and dried.

Polymerization

A stirred tank reactor having a volume of 45 $dm^3$ was operated as liquid-filled at a temperature of 50 °C and a pressure of 53 bar. Into the reactor was fed propylene so much that the average residence time in the reactor was 0.29 hours together with 0.05 g/h hydrogen and 2.2 g/h of a polymerization catalyst prepared according to Catalyst Preparation Example above with triethyl aluminium (TEA) as a cocatalyst and dicyclopentyldimethoxysilane (DCPDMS) as external donor so that the molar ratio of TEA/Ti was about 380 and TEA/DCPDMS was 4. The slurry was continuously withdrawn and directed to a loop reactor.

The loop reactor was operated at a temperature of 85 °C and a pressure of 53 bar. The production rate of propylene homopolymer was 14 kg/h and the melt flow rate $MFR_2$ was 34 g/10 min.

The polymer slurry from the loop reactor was directly conducted into a first gas phase reactor operated at a temperature of 95 °C and a pressure of 27 bar. Into the reactor were fed additional propylene and hydrogen, as well as nitrogen as an inert gas, so that the content of propylene was 73 % by mole and the ratio of hydrogen to propylene was 75 mol/kmol. The production rate in the reactor was 15 kg/h and the polymer withdrawn from the reactor had a melt flow rate $MFR_2$ of 31 g/10 min.

The reaction mixture from the first gas phase reactor was introduced into a second gas phase reactor operated at a temperature of 85 °C and a pressure of 30 bar together with additional propylene and nitrogen. The content of propylene was 42 % by mole and the ratio of hydrogen to propylene was 125 mol/kmol and the ratio of ethylene to propylene was 457 mol/kmol. The production rate in the reactor was 5 kg/h and the polymer withdrawn from the reactor had a melt flow rate $MFR_2$ of 23 g/10 min and ethylene content of 5 % by weight. The reaction mixture from the second gas phase reactor was introduced into a third gas phase reactor operated at a temperature of 85 °C and a pressure of 30 bar, where additional propylene, hydrogen and ethylene as comonomer were introduced so that the content of propylene was 50 % by mole, the ratio of hydrogen to ethylene was 231 mol/kmol and the molar ratio of ethylene to propylene was 438 mol/kmol. The production rate in the reactor was 7 kg/h and the polymer withdrawn from the reactor had a melt flow rate $MFR_2$ of 15 g/10 min and an ethylene content of 11% by weight.

The final polymer composition contained thus 33 % by weight of the polymer produced in the loop reactor, 37 % by weight of the polymer produced in the first gas phase reactor, 12 % by weight of the polymer produced in the second gas phase reactor and 18 % by weight of the polymer produced in the third gas phase reactor.

The polymer withdrawn from the reactor was mixed with effective amounts of Irgafos 168, Irganox 1010 and calcium stearate. In addition 9000 ppm talc was added to the composition, based on the weight of the polymer. The mixture of polymer and additives was then extruded to pellets by using a ZSK70 extruder (product of Coperion).

#### *Examples 2 to 5*

The procedure of Example 1 was repeated except that the process conditions were as disclosed in Table 1.

**Table 1:** Process parameters

|  |  | Ex 1 not according to the invention | Ex 2 | Ex 3 | Ex 4 | Ex 5 |
|---|---|---|---|---|---|---|
| LOOP Propylene feed | [kg/h] | 200 | 200 | 200 | 200 | 200 |
| LOOP Ethylene feed | [kg/h] | 0 | 0 | 0 | 0 | 0 |
| LOOP Hydrogen feed | [g/h] | 88 | 120 | 210 | 220 | 220 |

(continued)

| | | Ex 1 not according to the invention | Ex 2 | Ex 3 | Ex 4 | Ex 5 |
|---|---|---|---|---|---|---|
| LOOP Residence time | [h] | 0.56 | 0.5 | 0.35 | 0.34 | 0.35 |
| LOOP Split | [wt.-%] | 33 | 37 | 29 | 35 | 32 |
| LOOP MFR$_2$ | [g/10 min] | 35 | 57 | 120 | 121 | 125 |
| LOOP XS | [wt.-%] | 1.5 | 2.2 | 2.4 | 2.1 | 2.1 |
| GPR1 H2/C3 ratio | [mol/kmol] | 75 | 110 | 170 | 160 | 170 |
| GPR1 Residence time | [h] | 1.6 | 1.4 | 1.5 | 1.5 | 1.5 |
| GPR1 Split | [wt.-%] | 37 | 37 | 33 | 36 | 37 |
| GPR1 MFR$_2$ | [g/10 min] | 31 | 33 | 96 | 110 | 100 |
| GPR1 XS | [wt.-%] | | 1.8 | 1.7 | 1.7 | 1.9 |
| GPR2 H2/C2 ratio | [mol/kmol] | 270 | 62 | 45 | 15 | 43 |
| GPR2 C2/C3 ratio | [mol/kmol] | 460 | 480 | 490 | 500 | 500 |
| GPR2 Residence time | [h] | 1.3 | 1.6 | 1.7 | 2.0 | 2.4 |
| GPR2 Split | [wt.-%] | 12 | 16 | 14 | 13 | 16 |
| GPR2 MFR$_2$ | [g/10 min] | 23 | 22 | 36 | 41 | 37 |
| GPR2 XS | [wt.-%] | 15 | 18 | 21 | 18 | 20 |
| GPR2 AM | [wt.-%] | 14 | 17 | 18 | 15 | 19 |
| GPR2 Ethene of AM | [wt.-%] | 30 | 33 | 38 | 37 | 34 |
| GPR2 Viscosity of AM | [dl/g] | 1.7 | 2.9 | 3.2 | 4.1 | 3.3 |
| GPR2 Ethene content | [wt.-%] | 5.2 | 7.2 | 7.9 | 6.7 | 7.4 |
| GPR3 C2/C3 ratio | [mol/kmol] | 440 | 590 | 500 | 480 | 500 |
| GPR3 H2/C2 ratio | [mol/kmol] | 230 | 61 | 57 | 12 | 0 |
| GPR3 Residence time | [h] | 0.87 | 0.88 | 0.87 | 0.94 | 0.78 |
| GPR3 Split | [wt.-%] | 18 | 10 | 24 | 16 | 15 |
| GPR3 MFR$_2$ | [g/10 min] | 15 | 13 | 11 | 11 | 7.4 |
| GPR3 XS | [wt.-%] | 30 | 26 | 36 | 30 | 33 |
| GPR3 AM | [wt.-%] | 29 | 25 | 38 | 29 | 32 |
| GPR3 Ethene of AM | [wt.-%] | 32 | 36 | 39 | 47 | 47 |
| GPR3 Viscosity of AM | [dl/g] | 1.8 | 3.2 | 3.6 | 5.3 | 6.7 |
| GPR3 Ethene content | [wt.-%] | 11 | 12 | 16 | 15 | 14 |
| Flowability of the final PP powder | | 15.1 | 12.1 | 13.3 | 9.8 | 8.6 |

## Claims

1. Process for producing a polypropylene composition (PPC-F), said composition (PPC-F) comprises units derived from

(i) propylene and
(ii) at least one C2 to C20 $\alpha$-olefin other than propylene in an amount of at least 4.0 wt.% measured by Fourier transform infrared spectroscopy and given in wt.%, and
said process comprises the steps of

(a) producing in at least one first reactor (R-1) a first polypropylene (PP-1) having a xylene cold soluble (XCS) content measured according to ISO 6427 not exceeding 4.0 wt.-%,

(b) transferring said first polypropylene (PP-1) in a second reactor (R-2),

(c) producing in the second reactor (R-2) in the presence of the first polypropylene (PP-1) a second polypropylene (PP-2) thereby obtaining a first polypropylene composition (PPC-1), wherein

(c 1) said second polypropylene (PP-2) comprises units derived from

(i) propylene and
(ii) at least one C2 to C20 $\alpha$-olefin other than propylene in an amount of at least 9.0 wt-%,

(c 2) said first polypropylene composition (PPC-1) has a comonomer content in the amorphous fraction (AM) of the xylene cold soluble (XCS) fraction measured by Fourier transform infrared spectroscopy of at least 25 wt.%,

(d) transferring said first polypropylene composition (PPC-1) to a third reactor (R-3),

(e) producing in the third reactor (R-3) in the presence of the first polypropylene composition (PPC-1) a third polypropylene (PP-3) thereby obtaining the polypropylene composition (PPC-F), wherein the intrinsic viscosity (IV) of the amorphous part (AM) of the xylene cold soluble (XCS) fraction of the third polypropylene (PP-3) is at least 3.0 dl/g.

2. Process according to claim 1, wherein the first polypropylene (PP-1) is a propylene homopolymer (H-PP) or a random propylene copolymer (R-PP), said random propylene copolymer (R-PP) comprises units derived from

(i) propylene and
(ii) at least one C2 to C20 $\alpha$-olefin other than propylene in an amount of not exceeding 4.0 wt.%.

3. Process according to claim 1 or 2, wherein in a first reactor (R-1A), being preferably a loop reactor, a first fraction (A) of the first polypropylene (PP-1) is produced and subsequently in a first reactor (R-1B), being preferably a first gas phase reactor, a second fraction (B) of the first polypropylene (PP-1) is produced.

4. Process according to claim 3, wherein the first fraction (A) has a higher melt flow rate $MFR_2$ (230 °C) than the melt flow rate $MFR_2$ (230 °C) of fraction (B), said melt flow rates $MFR_2$ (230 °C) are measured according ISO 1133.

5. Process according to any of the preceding claims, wherein the first polypropylene composition (PPC-1) has

(i) a xylene cold soluble (XCS) content measured according to ISO 6427 of at least 5.0 wt.-%, preferably of at least 15 wt.%
and/or
(ii) an intrinsic viscosity (IV) of the amorphous part (AM) of the xylene cold soluble (XCS) fraction measured according to ISO 1628-1 of not more than 4.5 dl/g.

6. Process according to any of the preceding claims, wherein the second polypropylene (PP-2) has

(i) a comonomer content in the amorphous fraction (AM) of the xylene cold soluble (XCS) fraction of at least 25 wt.-%,
and/or
(ii) an intrinsic viscosity (IV) of the amorphous part (AM) of the xylene cold soluble (XCS) fraction of not more than 4.5 dl/g.

7. Process according to any one of the preceding claims, wherein the third polypropylene (PP-3) has

(i) a lower xylene cold soluble (XCS) content compared to the xylene cold soluble (XCS) content the second polypropylene (PP-2),
and/or
(ii) a higher intrinsic viscosity (IV) of the amorphous part (AM) of the xylene cold soluble (XCS) fraction compared to the intrinsic viscosity (IV) of the amorphous part (AM) of the xylene cold soluble (XCS) fraction of the second polypropylene (PP-2),

and/or

(iii) a lower comonomer content compared to the comonomer content of the second polypropylene (PP-2).

8. Process according to any one of the preceding claims, wherein the third polypropylene (PP-3) has a comonomer content of below 60 wt.%.

9. Process according to any one of the preceding claims, wherein

(a) the weight ratio between the first polypropylene (PP-1) to the second polypropylene (PP-2) is from 40:60 to 95:5,
and/or
(b) the weight ratio between the second polypropylene (PP-2) to the third polypropylene (PP-3) is from 40:60 to 95:5,
and/or
(c) the weight ratio between the first polypropylene composition (PPC-1) to the third polypropylene (PP-3) is from 60:40 to 90: 10.

10. Process according to any of the preceding claims, wherein the polypropylene composition (PPC-F) is a heterophasic polypropylene (HECO) comprising a matrix (M) in which an elastomeric fraction (E) is dispersed, wherein further the first polypropylene (PP-1) constitutes the matrix (M) and the second polypropylene (PP-2) is part of the elastomeric fraction (E).

11. Process according to any one of the preceding claims, wherein the polypropylene composition (PPC-F) is a heterophasic polypropylene (HECO), said heterophasic polypropylene (HECO) comprises units derived from

(i) propylene and
(ii) at least one C2 to C20 $\alpha$-olefin other than propylene in an amount of 9.0 to 20 wt.% measured by Fourier transform infrared spectroscopy,
said heterophasic polypropylene (HECO) comprises further

(a) said first polypropylene (PP-1) being a first propylene homopolymer (H-PP1),
(b) said second polypropylene (PP-2) being a first elastomeric propylene copolymer (E-PP1), said elastomeric propylene copolymer (E-PP1) has a xylene cold soluble (XCS) content of at least 90.0 wt-%,
(c) said third polypropylene (PP-3) being a second elastomeric propylene copolymer (E-PP2), said second elastomeric propylene copolymer (E-PP2)

($\alpha$) comprises units derived from

(i) propylene and
(ii) at least one C2 to C20 $\alpha$-olefin other than propylene

and
($\beta$) has an intrinsic viscosity (IV) of the amorphous phase (AM) of the xylene cold soluble (XCS) fraction of 8.0 to 15.0 dl/g.

12. Process according to any one of the preceding claims, wherein the polypropylene composition (PPC-F) is a heterophasic polypropylene (HECO), said heterophasic polypropylene (HECO) comprises units derived from

(i) propylene and
(ii) at least one C2 to C20 $\alpha$-olefin other than propylene in an amount of 9.0 to 20 wt.% measured by Fourier transform infrared spectroscopy,
said heterophasic polypropylene (HECO) comprises further

(a) said first polypropylene (PP-1) being a first propylene homopolymer (H-PP1)
(b) said second polypropylene (PP-2) being a first elastomeric propylene copolymer (E-PP1), said first elastomeric propylene copolymer (E-PP1) has a xylene cold soluble (XCS) content of at least 90.0 wt-%,
(c) said third polypropylene (PP-3) being a second propylene homopolymer (H-PP2).

**Patentansprüche**

1. Verfahren zur Herstellung einer Polypropylen-Zusammensetzung (PPC-F), wobei die Zusammensetzung (PPC-F) Einheiten umfasst, abgeleitet von

(i) Propylen und
(ii) mindestens einem von Propylen verschiedenen C2 bis C20 $\alpha$-Olefin in einer Menge von mindestens 4,0 Gew.-%, gemessen durch Fourier-Transformation-Infrarot-Spektroskopie und angegeben in Gew.-%, und wobei das Verfahren die Schritte umfasst von

(a) Erzeugen in mindestens einem ersten Reaktor (R-1) eines ersten Polypropylens (PP-1) mit einem in kaltem Xylol löslichen Gehalt (XCS), gemessen gemäß ISO 6427, der 4,0 Gew.-% nicht übersteigt,
(b) Überführen des ersten Polypropylens (PP-1) in einen zweiten Reaktor (R-2),
(c) Erzeugen in dem zweiten Reaktor (R-2) in Gegenwart des ersten Polypropylens (PP-1) eines zweiten Polypropylens (PP-2), wodurch eine erste Polypropylen-Zusammensetzung (PPC-1) erhalten wird, wobei

(c 1) das zweite Polypropylen (PP-2) Einheiten umfasst, abgeleitet von

(i) Propylen und
(ii) mindestens einem von Propylen verschiedenen C2 bis C20 $\alpha$-Olefin in einer Menge von mindestens 9,0 Gew.-%,

(c 2) die erste Polypropylen-Zusammensetzung (PPC-1) einen Comonomer-Gehalt in der amorphen Fraktion (AM) der in kaltem Xylol löslichen Fraktion (XCS), gemessen durch Fourier-Transformation-Infrarot-Spektroskopie, von mindestens 25 Gew.-% aufweist,

(d) Überführen der ersten Polypropylen-Zusammensetzung (PPC-1) zu einem dritten Reaktor (R-3),
(e) Erzeugen in dem dritten Reaktor (R-3) in Gegenwart der ersten Polypropylen-Zusammensetzung (PPC-1) eines dritten Polypropylens (PP-3), wodurch die Polypropylen-Zusammensetzung (PPC-F) erhalten wird, wobei die Grenzviskosität (IV) des amorphen Teils (AM) der in kaltem Xylol löslichen Fraktion (XCS) des dritten Polypropylens (PP-3) mindestens 3,0 dl/g ist.

2. Verfahren nach Anspruch 1, wobei das erste Polypropylen (PP-1) ein Propylen-Homopolymer (H-PP) oder ein statistisches Propylen-Copolymer (R-PP) ist, wobei das statistische Propylen-Copolymer (R-PP) Einheiten umfasst, abgeleitet von

(i) Propylen und
(ii) mindestens einem von Propylen verschiedenen C2 bis C20 $\alpha$-Olefin in einer Menge, die 4,0 Gew.-% nicht übersteigt.

3. Verfahren nach Anspruch 1 oder 2, wobei in einem ersten Reaktor (R-1A), der vorzugsweise ein Schlaufen-Reaktor ist, eine erste Fraktion (A) des ersten Polypropylens (PP-1) hergestellt wird und anschließend in einem ersten Reaktor (R-1B), der vorzugsweise ein erster Gas-Phasen-Reaktor ist, eine zweite Fraktion (B) des ersten Polypropylens (PP-1) hergestellt wird.

4. Verfahren nach Anspruch 3, wobei die erste Fraktion (A) eine höhere Schmelze-Fließ-Rate $MFR_2$ (230°C) als die Schmelze-Fließ-Rate $MFR_2$ (230°C) von Fraktion (B) aufweist, wobei die Schmelze-Fließ-Raten $MFR_2$ (230°C) gemäß ISO 1133 gemessen werden.

5. Verfahren nach einem der vorangehenden Ansprüche, wobei die erste Polypropylen-Zusammensetzung (PPC-1) aufweist

(i) einen in kaltem Xylol löslichen Gehalt (XCS), gemessen gemäß ISO 6427, von mindestens 5,0 Gew.-%, vorzugsweise von mindestens 15 Gew.-%,
und/oder
(ii) eine Grenzviskosität (IV) des amorphen Teils (AM) der in kaltem Xylol löslichen Fraktion (XCS), gemessen gemäß ISO 1628-1, von nicht mehr als 4,5 dl/g.

**6.** Verfahren nach einem der vorangehenden Ansprüche, wobei das zweite Polypropylen (PP-2) aufweist

(i) einen Comonomer-Gehalt in der amorphen Fraktion (AM) der in kaltem Xylol löslichen Fraktion (XCS) von mindestens 25 Gew.-%,
und/oder
(ii) eine Grenzviskosität (IV) des amorphen Teils (AM) der in kaltem Xylol löslichen Fraktion (XCS) von nicht mehr als 4,5 dl/g.

**7.** Verfahren nach einem der vorangehenden Ansprüche, wobei das dritte Polypropylen (PP-3) aufweist

(i) einen geringeren in kaltem Xylol löslichen Gehalt (XCS), verglichen mit dem in kaltem Xylol löslichen Gehalt (XCS) des zweiten Polypropylens (PP-2),
und/oder
(ii) eine höhere Grenzviskosität (IV) des amorphen Teils (AM) der in kaltem Xylol löslichen Fraktion (XCS), verglichen mit der Grenzviskosität (IV) des amorphen Teils (AM) der in kaltem Xylol löslichen Fraktion (XCS) des zweiten Polypropylens (PP-2),
und/oder
(iii) einen geringeren Comonomer-Gehalt, verglichen mit dem Comonomer-Gehalt des zweiten Polypropylens (PP-2).

**8.** Verfahren nach einem der vorangehenden Ansprüche, wobei das dritte Polypropylen (PP-3) einen Comonomer-Gehalt von unter 60 Gew.-% aufweist.

**9.** Verfahren nach einem der vorangehenden Ansprüche, wobei

(a) das Gewichts-Verhältnis zwischen dem ersten Polypropylen (PP-1) zu dem zweiten Polypropylen (PP-2) von 40:60 bis 95:5 ist,
und/oder
(b) das Gewichts-Verhältnis zwischen dem zweiten Polypropylen (PP-2) zu dem dritten Polypropylen (PP-3) von 40:60 bis 95:5 ist,
und/oder
(c) das Gewichts-Verhältnis zwischen der ersten Polypropylen-Zusammensetzung (PPC-1) zu dem dritten Polypropylen (PP-3) von 60:40 bis 90:10 ist.

**10.** Verfahren nach einem der vorangehenden Ansprüche, wobei die Polypropylen-Zusammensetzung (PPC-F) ein heterophasisches Polypropylen (HECO) ist, umfassend eine Matrix (M), in der eine elastomere Fraktion (E) dispergiert ist, wobei weiterhin das erste Polypropylen (PP-1) die Matrix (M) ausmacht und das zweite Polypropylen (PP-2) Teil der elastomeren Fraktion (E) ist.

**11.** Verfahren nach einem der vorangehenden Ansprüche, wobei die Polypropylen-Zusammensetzung (PPC-F) ein heterophasisches Polypropylen (HECO) ist, das heterophasische Polypropylen (HECO) Einheiten umfasst, abgeleitet von

(i) Propylen und
(ii) mindestens einem von Propylen verschiedenen C2 bis C20 $\alpha$-Olefin in einer Menge von 9,0 bis 20 Gew.-%, gemessen durch Fourier-Transformation-Infrarot-Spektroskopie,
wobei das heterophasische Polypropylen (HECO) weiterhin umfasst

(a) das erste Polypropylen (PP-1), das ein erstes Propylen-Homopolymer (H-PP1) ist,
(b) das zweite Polypropylen (PP-2), das ein erstes elastomeres Propylen-Copolymer (E-PP1) ist, wobei das elastomere Propylen-Copolymer (E-PP1) einen in kaltem Xylol löslichen Gehalt (XCS) von mindestens 90,0 Gew.-% aufweist,
(c) das dritte Polypropylen (PP-3), das ein zweites elastomeres Propylen-Copolymer (E-PP2) ist, wobei das zweite elastomere Propylen-Copolymer (E-PP2)

($\alpha$) Einheiten umfasst, abgeleitet von

(i) Propylen und

(ii) mindestens einem von Propylen verschiedenen C2 bis C20 α-Olefin

und

(β) eine Grenzviskosität (IV) der amorphen Phase (AM) der in kaltem Xylol löslichen Fraktion (XCS) von 8,0 bis 15,0 dl/g aufweist.

12. Verfahren nach einem der vorangehenden Ansprüche, wobei die Polypropylen-Zusammensetzung (PPC-F) ein heterophasisches Polypropylen (HECO) ist, wobei das heterophasische Polypropylen (HECO) Einheiten umfasst, abgeleitet von

(i) Propylen und
(ii) mindestens einem von Propylen verschiedenen C2 bis C20 α-Olefin in einer Menge von 9,0 bis 20 Gew.-%, gemessen durch Fourier-Transformation-Infrarot-Spektroskopie,
wobei das heterophasische Polypropylen (HECO) weiterhin umfasst

(a) das erste Polypropylen (PP-1), das ein erstes Propylen-Homopolymer(H-PP1) ist,
(b) das zweite Polypropylen (PP-2), das ein erstes elastomeres Propylen-Copolymer (E-PP1) ist, wobei das erste elastomere Propylen-Copolymer (E-PP1) einen in kaltem Xylol löslichen Gehalt (XCS) von mindestens 90,0 Gew.-% aufweist,
(c) das dritte Polypropylen (PP-3), das ein zweites Propylen-Homopolymer (H-PP2) ist.

## Revendications

1. Procédé pour produire une composition de polypropylène (PPC-F), ladite composition (PPC-F) comprenant des motifs dérivés de

(i) propylène et
(ii) au moins une α-oléfine en $C_2$ à $C_{20}$ autre que le propylène en une quantité d'au moins 4,0 % en poids, mesurée par spectroscopie infrarouge à transformée de Fourier et indiquée en pourcentage en poids, et ledit procédé comprenant les étapes :

(a) de production, dans au moins un premier réacteur (R-1), d'un premier polypropylène (PP-1) présentant une teneur en composés solubles dans le xylène froid (XCS), mesurée conformément à la norme ISO 6427, ne dépassant pas 4,0 % en poids,
(b) de transfert dudit premier polypropylène (PP-1) dans un deuxième réacteur (R-2),
(c) de production dans le deuxième réacteur (R-2), en présence du premier polypropylène (PP-1), d'un deuxième polypropylène (PP-2), en obtenant ainsi une première composition de polypropylène (PPC-1) où

(c1) ledit deuxième polypropylène (PP-2) comprenant des motifs dérivés de

(i) propylène et
(ii) au moins une α-oléfine en $C_2$ à $C_{20}$ autre que le propylène en une quantité d'au moins 9,0 % en poids,

(c2) ladite première composition de polypropylène (PPC-1) présente une teneur en comonomères dans la fraction amorphe (AM) de la fraction soluble dans le xylène froid (XCS), mesurée par spectroscopie infrarouge à transformée de Fourier, d'au moins 25 % en poids,

(d) de transfert de ladite première composition de polypropylène (PPC-1) dans un troisième réacteur (R-3),
(e) de production dans le troisième réacteur (R-3), en présence de la première composition de polypropylène (PPC-1), d'un troisième polypropylène (PP-3), en obtenant ainsi la composition de polypropylène (PPC-F), la viscosité intrinsèque (IV) de la partie amorphe (AM) de la fraction soluble dans le xylène froid (XCS) du troisième polypropylène (PP-3) étant d'au moins 3,0 dl/g.

2. Procédé selon la revendication 1, dans lequel le premier polypropylène (PP-1) est un homopolymère de propylène (H-PP) ou un copolymère de propylène statistique (R-PP), ledit copolymère de propylène statistique (R-PP) comprenant des motifs dérivés de

(i) propylène et

(ii) au moins une α-oléfine en $C_2$ à $C_{20}$ autre que le propylène en une quantité ne dépassant pas 4,0 % en poids.

3. Procédé selon la revendication 1 ou 2, dans lequel, dans un premier réacteur (R-1A), qui est de préférence un réacteur à boucle, une première fraction (A) du premier polypropylène (PP-1) est produite et ensuite, dans un premier réacteur (R-1B), qui est de préférence un réacteur en phase gazeuse, une deuxième fraction (B) du premier polypropylène (PP-1) est produite.

4. Procédé selon la revendication 3, dans lequel la première fraction (A) présente un indice de fluage $MFR_2$ (230°C) supérieur à l'indice de fluage $MFR_2$ (230°C) de la fraction (B), lesdits indices de fluage $MFR_2$ (230°C) étant mesurés conformément à la norme ISO 1133.

5. Procédé selon l'une quelconque des revendications précédentes, dans lequel la première composition de polypropylène (PPC-1) présente

(i) une teneur en composés solubles dans le xylène froid (XCS), mesurée conformément à la norme ISO 6427, d'au moins 5,0 % en poids, de préférence d'au moins 15 % en poids,
et/ou
(ii) une viscosité intrinsèque (IV) de la partie amorphe (AM) de la fraction soluble dans le xylène froid (XCS), mesurée conformément à la norme ISO 1628-1, ne dépassant pas 4,5 dl/g.

6. Procédé selon l'une quelconque des revendications précédentes, dans lequel le deuxième polypropylène (PP-2) présente

(i) une teneur en comonomères dans la fraction amorphe (AM) de la fraction soluble dans le xylène froid (XCS) d'au moins 25 % en poids,
et/ou
(ii) une viscosité intrinsèque (IV) de la partie amorphe (AM) de la fraction soluble dans le xylène froid (XCS) ne dépassant pas 4,5 dl/g.

7. Procédé selon l'une quelconque des revendications précédentes, dans lequel le troisième polypropylène (PP-3) présente

(i) une teneur en composés solubles dans le xylène froid (XCS) inférieure à la teneur composés solubles dans le xylène froid (XCS) du deuxième polypropylène (PP-2), et/ou
(ii) une viscosité intrinsèque (IV) de la partie amorphe (AM) de la fraction soluble dans le xylène froid (XCS) supérieure à la viscosité intrinsèque (IV) de la partie amorphe (AM) de la fraction soluble dans le xylène froid (XCS) du deuxième polypropylène (PP-2),
et/ou
(iii) une teneur en comonomères inférieure à la teneur en comonomères du deuxième polypropylène (PP-2).

8. Procédé selon l'une quelconque des revendications précédentes, dans lequel le troisième polypropylène (PP-3) présente une teneur en comonomères inférieure à 60 % en poids.

9. Procédé selon l'une quelconque des revendications précédentes, dans lequel

(a) le rapport en poids entre le premier polypropylène (PP-1) et le deuxième polypropylène (PP-2) est de 40/60 à 95/5,
et/ou
(b) le rapport en poids entre le deuxième polypropylène (PP-2) et le troisième polypropylène (PP-3) est de 40/60 à 95/5,
et/ou
(c) le rapport en poids entre le premier polypropylène (PP-1) et le troisième polypropylène (PP-3) est de 60/40 à 90/10.

10. Procédé selon l'une quelconque des revendications précédentes, dans lequel la composition de polypropylène (PPC-F) est un polypropylène hétérophasique (HECO) comprenant une matrice (M) dans laquelle une fraction élastomère (E) est dispersée, et dans lequel en outre le premier polypropylène (PP-1) constitue la matrice (M) et le deuxième polypropylène (PP-2) fait partie de la fraction élastomère (E).

11. Procédé selon l'une quelconque des revendications précédentes, dans lequel la composition de polypropylène (PPC-F) est un polypropylène hétérophasique (HECO), ledit polypropylène hétérophasique (HECO) comprenant des motifs dérivés de

(i) propylène et
(ii) au moins une α-oléfine en $C_2$ à $C_{20}$ autre que le propylène en une quantité de 9,0 à 20 % en poids, mesurée par spectroscopie infrarouge à transformée de Fourier, ledit polypropylène hétérophasique (HECO) comprenant en outre

(a) ledit premier polypropylène (PP-1) qui est un premier homopolymère de propylène (H-PP1),
(b) ledit deuxième polypropylène (PP-2) qui est un premier copolymère de propylène élastomère (E-PP1), ledit copolymère de propylène élastomère (E-PP1) présentant une teneur en composés solubles dans le xylène froid (XCS) d'au moins 90 % en poids,
(c) ledit troisième polypropylène (PP-3) qui est un deuxième copolymère de propylène élastomère (E-PP2), ledit deuxième copolymère de propylène élastomère (E-PP2)

(α) comprenant des motifs dérivés de

(i) propylène et
(ii) au moins une α-oléfine en $C_2$ à $C_{20}$ autre que le propylène,

et
(β) présentant une viscosité intrinsèque (IV) de la phase amorphe (AM) de la fraction soluble dans le xylène froid (XCS) de 8,0 à 15,0 dl/g.

12. Procédé selon l'une quelconque des revendications précédentes, dans lequel la composition de polypropylène (PPC-F) est un polypropylène hétérophasique (HECO), ledit polypropylène hétérophasique (HECO) comprenant des motifs dérivés de

(i) propylène et
(ii) au moins une α-oléfine en $C_2$ à $C_{20}$ autre que le propylène en une quantité de 9,0 à 20 % en poids, mesurée par spectroscopie infrarouge à transformée de Fourier, ledit polypropylène hétérophasique (HECO) comprenant en outre

(a) ledit premier polypropylène (PP-1) qui est un premier homopolymère de propylène (H-PP1),
(b) ledit deuxième polypropylène (PP-2) qui est un premier copolymère de propylène élastomère (E-PP1), ledit copolymère de propylène élastomère (E-PP1) présentant une teneur en composés solubles dans le xylène froid (XCS) d'au moins 90 % en poids,
(c) ledit troisième polypropylène (PP-3) qui est un deuxième homopolymère de propylène (H-PP2).

Figure 1: Flowability device

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008015113 A
- WO 2009153213 A
- WO 2004000899 A
- EP 0491566 A
- EP 0586390 A
- WO 9812234 A
- EP 0887379 A1
- WO 9212182 A
- WO 2004111095 A
- WO 9924478 A
- WO 9924479 A
- WO 0068315 A

**Non-patent literature cited in the description**

- *Thermochimica Acta,* 1990, vol. 66, 53-68